(19) **Europäisches Patentamt** / **European Patent Office** / **Office européen des brevets**

(11) **EP 4 647 968 A1**

(12) **EUROPEAN PATENT APPLICATION**
published in accordance with Art. 153(4) EPC

(43) Date of publication:
**12.11.2025 Bulletin 2025/46**

(51) International Patent Classification (IPC):
**G06N 3/0464** $^{(2023.01)}$    **G06N 3/048** $^{(2023.01)}$

(21) Application number: **24749694.6**

(86) International application number:
**PCT/CN2024/074830**

(22) Date of filing: **31.01.2024**

(87) International publication number:
**WO 2024/160215 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 CN 202310093712**

(71) Applicant: **Huawei Technologies Co., Ltd.**
**Shenzhen, Guangdong 518129 (CN)**

(72) Inventors:
• **CHEN, Hanting**
  **Shenzhen, Guangdong 518129 (CN)**
• **WANG, Yunhe**
  **Shenzhen, Guangdong 518129 (CN)**
• **HAN, Kai**
  **Shenzhen, Guangdong 518129 (CN)**
• **TANG, Yehui**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **DATA PROCESSING METHOD AND APPARATUS**

(57)    This application discloses a data processing method, relates to the field of artificial intelligence, and is applied to an activation unit in a neural network. The activation unit includes a plurality of processing branches. The method includes: performing activation processing on input data via each processing branch in the plurality of processing branches based on a corresponding activation function, to obtain a plurality of processing results; and fusing the plurality of processing results, to obtain a target processing result. In this application, a nonlinearity enhancement activation function is obtained by fusing a plurality of activation functions, to increase nonlinearity of the activation function, and further improve network accuracy.

Perform activation processing on input data via each processing branch in a plurality of processing branches based on a corresponding activation function, to obtain a plurality of processing results — 901

Fuse the plurality of processing results, to obtain a target processing result — 902

FIG. 9

## Description

This application claims priority to Chinese Patent Application No. 202310093712.1, filed with the China National Intellectual Property Administration on January 31, 2023 and entitled "DATA PROCESSING METHOD AND APPARATUS THEREOF", which is incorporated herein by reference in its entirety.

## TECHNICAL FIELD

This application relates to the field of artificial intelligence, and in particular, to a data processing method and an apparatus thereof.

## BACKGROUND

A neural network, also referred to as an artificial neural network, includes a type of machine learning models. These machine learning models include a group of connected nodes, and these nodes may also be referred to as neurons or perceptrons. The neural network may be organized into one or more layers. Each node in the neural network may include an activation unit configured to perform an activation operation, and the activation unit may include an activation function. If a group of inputs is given, the activation function may define an output of a node. An input of the neural network may be propagated through layers of nodes via activation functions, to calculate an output of the neural network.

However, as a quantity of layers increases, a speed of the neural network becomes slower. In addition, on a machine with high computing power, a deep network has a great disadvantage in speed due to poor parallelism of the deep network. In the neural network, a convolution operation, calculation at a self-attention layer, and calculation at a fully connected layer are all linear operations. When these layers are stacked, a nonlinear activation function layer needs to be added after these layers. In a conventional technology, a neural network (especially a shallow neural network) usually has a small quantity of nonlinear activation functions, resulting in poor network accuracy.

## SUMMARY

This application provides a data processing method and a related apparatus, to improve network accuracy.

According to a first aspect, this application provides a data processing method, applied to an activation unit in a neural network, where the activation unit includes a plurality of processing branches, and each processing branch corresponds to one activation function. The method includes: performing activation processing on input data via each processing branch in the plurality of processing branches based on the corresponding activation function, to obtain a plurality of processing results; and fusing the plurality of processing results, to obtain a target processing result. The activation unit may be a module that performs activation processing on the input data. In the conventional technology, one activation unit includes only one processing branch (one processing branch includes one activation function). In this embodiment of this application, one activation unit includes a plurality of processing branches.

In the foregoing manner, the nonlinearity enhancement activation function is obtained by fusing the plurality of processing results of activation functions, to increase nonlinearity of the activation function, and further improve network accuracy.

In a possible implementation, at least two processing branches in the plurality of processing branches correspond to different activation functions. That the activation functions are different herein may be understood as that types of the activation functions are different. The type of the activation function may be RELU, Sigmoid, or the like. Different types of activation functions exist in one activation unit, to increase the nonlinearity of the activation unit, and further improve the network accuracy.

In a possible implementation, to further increase the nonlinearity of the activation unit, the input data and a target parameter may be calculated before an activation operation according to a specific operation rule (for example, addition or multiplication).

Specifically, at least one processing branch in the plurality of processing branches corresponds to a target parameter. Performing activation processing on input data via each processing branch in the plurality of processing branches based on the corresponding activation function, to obtain the plurality of processing results includes: performing activation processing on a calculation result of the input data and the target parameter via each processing branch in the at least one processing branch based on the corresponding activation function, to obtain a processing result of the at least one processing branch.

The input data and the target parameter are calculated according to the specific operation rule (for example, addition or multiplication), to increase the nonlinearity of the activation unit, and further improve the network accuracy.

In a possible implementation, the target parameter includes a first parameter, and the calculation result is a sum result of the input data and the first parameter.

In a possible implementation, at least two processing branches in the plurality of processing branches correspond to different first parameters; or a first parameter corresponding to at least one processing branch in the plurality of processing branches is updated during model training. In other words, the first parameter may be a preset parameter, or may be a parameter updated during model training. As the model training is performed, an updated first parameter can further improve the network accuracy.

In a possible implementation, the target parameter includes a third parameter, and the calculation result includes a product result of the input data and the third parameter; or the calculation result includes the first parameter and the third parameter, and the calculation result includes a sum result of the product result and the first parameter.

In a possible implementation, at least two processing branches in the plurality of processing branches correspond to different third parameters; or a third parameter corresponding to at least one processing branch in the plurality of processing branches is updated during model training. In other words, the third parameter may be a preset parameter, or may be a parameter updated during model training. As the model training is performed, an updated third parameter can further improve the network accuracy.

In a possible implementation, at least one processing branch in the plurality of processing branches corresponds to a second parameter; and fusing the plurality of processing results, to obtain the target processing result includes: performing weighted summation on the plurality of processing results based on a second parameter that corresponds to each processing branch in the at least one processing branch and that is used as a weight, to obtain the target processing result. Different weights are set for different branches during fusion, to further increase the nonlinearity of the activation unit, and further improve the network accuracy.

In a possible implementation, at least two processing branches in the plurality of processing branches correspond to different second parameters; or a second parameter corresponding to at least one processing branch in the plurality of processing branches is updated during model training. In other words, the second parameter may be a preset parameter, or may be a parameter updated during model training. As the model training is performed, an updated third parameter can further improve the network accuracy.

In a possible implementation, the activation function is a RELU function, and each processing branch in the plurality of processing branches corresponds to a first parameter and a second parameter; performing activation processing on input data via each processing branch in the plurality of processing branches based on the corresponding activation function, to obtain the plurality of processing results includes: performing activation processing on the sum result of the input data and the first parameter via each processing branch in the plurality of processing branches based on the corresponding activation function, to obtain a plurality of processing results; and fusing the plurality of processing results, to obtain the target processing result includes: performing weighted summation on the plurality of processing results based on the second parameter that corresponds to each processing branch in the plurality of processing branches and that is used as a weight, to obtain the target processing result.

In a possible implementation, the method further includes: training the neural network, to obtain an updated neural network, where the neural network further includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer; and obtaining a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

During training, a plurality of layers may be used for training, to increase depths of the layers. Because there is no nonlinear function between these layers, and all the layers are linear layers, these layers may be fused during inference. This can improve training accuracy without increasing an inference speed.

In a possible implementation, the neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer.

Obtaining the third network layer based on the updated first network layer and the updated second network layer includes:

obtaining the third network layer based on the updated first network layer, the updated second network layer, and the updated fourth network layer, where the third weight is obtained by fusing the updated first weight, the updated second weight, and the updated fourth weight.

According to a second aspect, this application provides a data processing method, applied to an activation unit in a neural network, where the activation unit includes a plurality of processing branches. The method includes: determining a target processing branch from the plurality of processing branches based on input data of the activation unit; and

performing activation processing on the input data via the target processing branch based on a corresponding activation function, to obtain a target processing result. In the foregoing manner, the activation unit includes the plurality of processing branches, and the corresponding processing branch may be determined based on the input data, to perform an activation operation. Because the plurality of processing branches are included, activation functions in the activation unit are stacked for nonlinearity, to increase nonlinearity of the activation function, and further improve network accuracy.

In a possible implementation, different processing branches in the plurality of processing branches correspond to different value ranges; and determining the target processing branch from the plurality of processing branches based on the input data of the activation unit includes: determining, from the plurality of processing branches based on the input data of the activation unit, a processing branch whose corresponding value range includes the input data as the target processing branch.

For specific descriptions of the processing branch (and a processing subbranch described subsequently), refer to the description of the processing branch in the first aspect. Similarities are not described again.

In a possible implementation, at least two processing branches in the plurality of processing branches correspond to different activation functions.

In a possible implementation, at least one processing branch in the plurality of processing branches corresponds to a target parameter; and performing activation processing on the input data via the target processing branch based on the corresponding activation function includes: performing activation processing on a calculation result of the input data and the target parameter via the target processing branch based on the corresponding activation function.

In a possible implementation, the target parameter includes a first parameter, and the calculation result is a sum result of the input data and the first parameter.

In a possible implementation, at least two processing branches in the plurality of processing branches correspond to different first parameters; or a first parameter corresponding to at least one processing branch in the plurality of processing branches is updated during model training.

In a possible implementation, the target parameter includes a third parameter, and the calculation result includes a product result of the input data and the third parameter; or the calculation result includes the first parameter and the third parameter, and the calculation result includes a sum result of the product result and the first parameter.

In a possible implementation, at least two processing branches in the plurality of processing branches correspond to different third parameters; or a third parameter corresponding to at least one processing branch in the plurality of processing branches is updated during model training.

In a possible implementation, at least one processing branch in the plurality of processing branches corresponds to a second parameter. Performing activation processing on the input data via the target processing branch based on the corresponding activation function, to obtain the target processing result includes: performing activation processing on the input data via the target processing branch based on the corresponding activation function, to obtain a processing result of activation processing; and fusing the processing result and a second parameter that corresponds to the target processing branch and that is used as a weight, to obtain the target processing result.

In a possible implementation, at least two processing branches in the plurality of processing branches correspond to different second parameters; or a second parameter corresponding to at least one processing branch in the plurality of processing branches is updated during model training.

In a possible implementation, at least one processing branch in the plurality of processing branches includes a plurality of processing subbranches, and each processing subbranch corresponds to one activation function. When the target processing branch includes a plurality of processing subbranches, performing activation processing on the input data via the target processing branch based on the corresponding activation function includes: processing the input data via each processing branch in the plurality of processing subbranches included in the target processing branch, to obtain a plurality of processing results; and fusing the plurality of processing results, to obtain the target processing result.

In a possible implementation, at least two processing subbranches in the plurality of processing subbranches correspond to different activation functions.

In a possible implementation, at least one processing subbranch in the plurality of processing subbranches corresponds to a target parameter.

The performing activation processing on the input data via a target processing subbranch based on a corresponding activation function includes:

performing activation processing on the calculation result of the input data and the target parameter via a target processing subbranch based on a corresponding activation function.

In a possible implementation, the target parameter includes a fourth parameter, and the calculation result is a sum result of the input data and the fourth parameter.

In a possible implementation, at least two processing subbranches in the plurality of processing subbranches correspond to different fourth parameters; or

a fourth parameter corresponding to at least one processing subbranch in the plurality of processing subbranches is updated during model training.

In a possible implementation, the target parameter includes a sixth parameter, and the calculation result includes a product result of the input data and the sixth parameter; or
the calculation result includes the fourth parameter and the sixth parameter, and the calculation result includes a sum result of the product result and the fourth parameter.

In a possible implementation, at least two processing subbranches in the plurality of processing subbranches correspond to different sixth parameters; or
a sixth parameter corresponding to at least one processing subbranch in the plurality of processing subbranches is updated during model training.

In a possible implementation, at least one processing subbranch in the plurality of processing subbranches corresponds to a fifth parameter.

The performing activation processing on the input data via a target processing subbranch based on a corresponding activation function, to obtain a target processing result includes:

performing activation processing on the input data via a target processing subbranch based on a corresponding activation function, to obtain a processing result of activation processing; and
fusing the processing result and a fifth parameter that corresponds to the target processing subbranch and that is used as a weight, to obtain the target processing result.

In a possible implementation, at least two processing subbranches in the plurality of processing subbranches correspond to different fifth parameters; or a fifth parameter corresponding to at least one processing subbranch in the plurality of processing subbranches is updated during model training.

In a possible implementation, at least two processing branches in the plurality of processing branches include a plurality of processing subbranches, and quantities of processing subbranches included in a plurality of processing branches in the at least two processing branches are different.

In a possible implementation, the method further includes:

training the neural network, to obtain an updated neural network, where the neural network further includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer; and
obtaining a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

In a possible implementation, the neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer.

Obtaining the third network layer based on the updated first network layer and the updated second network layer includes:
obtaining the third network layer based on the updated first network layer, the updated second network layer, and the updated fourth network layer, where the third weight is obtained by fusing the updated first weight, the updated second weight, and the updated fourth weight.

According to a third aspect, this application provides a data processing method. The method includes: training a neural network, to obtain an updated neural network, where the neural network includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer; and obtaining a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

During training, a plurality of layers may be used for training, to increase depths of the layers. Because there is no nonlinear function between these layers, and all the layers are linear layers, these layers may be fused during inference.

This can improve training accuracy without increasing an inference speed.

In a possible implementation, the neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer; and obtaining the third network layer based on the updated first network layer and the updated second network layer includes: obtaining the third network layer based on the updated first network layer, the updated second network layer, and the updated fourth network layer, where the third weight is obtained by fusing the updated first weight, the updated second weight, and the updated fourth weight.

According to a fourth aspect, this application provides a data processing apparatus, used in an activation unit in a neural network, where the activation unit includes a plurality of processing branches, and each processing branch corresponds to one activation function. The apparatus includes:

a processing module, configured to: perform activation processing on input data via each processing branch in the plurality of processing branches based on the corresponding activation function, to obtain a plurality of processing results; and

fuse the plurality of processing results, to obtain a target processing result.

In a possible implementation, at least two processing branches in the plurality of processing branches correspond to different activation functions.

In a possible implementation, at least one processing branch in the plurality of processing branches corresponds to a target parameter.

The processing module is specifically configured to:

perform activation processing on a calculation result of the input data and the target parameter via each processing branch in the at least one processing branch based on the corresponding activation function, to obtain a processing result of the at least one processing branch.

In a possible implementation, the target parameter includes a first parameter, and the calculation result is a sum result of the input data and the first parameter.

In a possible implementation, at least two processing branches in the plurality of processing branches correspond to different first parameters; or a first parameter corresponding to at least one processing branch in the plurality of processing branches is updated during model training.

In a possible implementation, the target parameter includes a third parameter, and the calculation result includes a product result of the input data and the third parameter; or

the calculation result includes the first parameter and the third parameter, and the calculation result includes a sum result of the product result and the first parameter.

In a possible implementation, at least two processing branches in the plurality of processing branches correspond to different third parameters; or

a third parameter corresponding to at least one processing branch in the plurality of processing branches is updated during model training.

In a possible implementation, at least one processing branch in the plurality of processing branches corresponds to a second parameter.

The processing module is specifically configured to:

perform weighted summation on the plurality of processing results based on a second parameter that corresponds to each processing branch in the at least one processing branch and that is used as a weight, to obtain the target processing result.

In a possible implementation, at least two processing branches in the plurality of processing branches correspond to different second parameters; or

a second parameter corresponding to at least one processing branch in the plurality of processing branches is updated during model training.

In a possible implementation, the activation function is a RELU function, and each processing branch in the plurality of processing branches corresponds to a first parameter and a second parameter.

The processing module is specifically configured to:

perform activation processing on the sum result of the input data and the first parameter via each processing branch in the plurality of processing branches based on the corresponding activation function, to obtain a plurality of processing results; and

fusing the plurality of processing results, to obtain the target processing result includes:

performing weighted summation on the plurality of processing results based on the second parameter that corresponds to each processing branch in the plurality of processing branches and that is used as a weight, to obtain the target processing result.

In a possible implementation, the processing module is further configured to:

train the neural network, to obtain an updated neural network, where the neural network further includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer; and

obtain a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

The neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer.

The processing module is specifically configured to:

obtain the third network layer based on the updated first network layer, the updated second network layer, and the updated fourth network layer, where the third weight is obtained by fusing the updated first weight, the updated second weight, and the updated fourth weight.

According to a fifth aspect, this application provides a data processing apparatus, used in an activation unit in a neural network, where the activation unit includes a plurality of processing branches, and each processing branch corresponds to one activation function. The apparatus includes: a processing module, configured to: determine a target processing branch from the plurality of processing branches based on input data of the activation unit; and perform activation processing on the input data via the target processing branch based on a corresponding activation function, to obtain a target processing result.

In a possible implementation, different processing branches in the plurality of processing branches correspond to different value ranges; and determining the target processing branch from the plurality of processing branches based on the input data of the activation unit includes: determining, from the plurality of processing branches based on the input data of the activation unit, a processing branch whose corresponding value range includes the input data as the target processing branch.

In a possible implementation, at least two processing branches in the plurality of processing branches correspond to different activation functions.

In a possible implementation, at least one processing branch in the plurality of processing branches corresponds to a target parameter. The processing module is specifically configured to:

perform activation processing on a calculation result of the input data and the target parameter via the target processing branch based on the corresponding activation function.

In a possible implementation, the target parameter includes a first parameter, and the calculation result is a sum result of the input data and the first parameter.

In a possible implementation, at least two processing branches in the plurality of processing branches correspond to different first parameters; or a first parameter corresponding to at least one processing branch in the plurality of processing branches is updated during model training.

In a possible implementation, the target parameter includes a third parameter, and the calculation result includes a product result of the input data and the third parameter; or the calculation result includes the first parameter and the third parameter, and the calculation result includes a sum result of the product result and the first parameter.

In a possible implementation, at least two processing branches in the plurality of processing branches correspond to different third parameters; or a third parameter corresponding to at least one processing branch in the plurality of processing branches is updated during model training.

In a possible implementation, at least one processing branch in the plurality of processing branches corresponds to a second parameter. The processing module is specifically configured to:

perform activation processing on the input data via the target processing branch based on the corresponding activation function, to obtain a processing result of activation processing; and fuse the processing result and a second parameter that corresponds to the target processing branch and that is used as a weight, to obtain the target processing result.

In a possible implementation, at least two processing branches in the plurality of processing branches correspond to different second parameters; or a second parameter corresponding to at least one processing branch in the plurality of processing branches is updated during model training.

In a possible implementation, at least one processing branch in the plurality of processing branches includes a plurality of processing subbranches, and each processing subbranch corresponds to one activation function. When the target processing branch includes a plurality of processing subbranches, the processing module is specifically configured to:

process the input data via each processing branch in the plurality of processing subbranches included in the target processing branch, to obtain a plurality of processing results; and fuse the plurality of processing results, to obtain the target processing result.

In a possible implementation, at least two processing subbranches in the plurality of processing subbranches correspond to different activation functions.

In a possible implementation, at least one processing subbranch in the plurality of processing subbranches corresponds to a target parameter.

The processing module is specifically configured to:

perform activation processing on the calculation result of the input data and the target parameter via a target processing subbranch based on a corresponding activation function.

In a possible implementation, the target parameter includes a fourth parameter, and the calculation result is a sum result of the input data and the fourth parameter.

In a possible implementation, at least two processing subbranches in the plurality of processing subbranches correspond to different fourth parameters; or

a fourth parameter corresponding to at least one processing subbranch in the plurality of processing subbranches is updated during model training.

In a possible implementation, the target parameter includes a sixth parameter, and the calculation result includes a product result of the input data and the sixth parameter; or

the calculation result includes the fourth parameter and the sixth parameter, and the calculation result includes a sum result of the product result and the fourth parameter.

In a possible implementation, at least two processing subbranches in the plurality of processing subbranches correspond to different sixth parameters; or

a sixth parameter corresponding to at least one processing subbranch in the plurality of processing subbranches is updated during model training.

In a possible implementation, at least one processing subbranch in the plurality of processing subbranches corresponds to a fifth parameter.

The processing module is specifically configured to:

perform activation processing on the input data via a target processing subbranch based on a corresponding activation function, to obtain a processing result of activation processing; and

fuse the processing result and a fifth parameter that corresponds to the target processing subbranch and that is used as a weight, to obtain the target processing result.

In a possible implementation, at least two processing subbranches in the plurality of processing subbranches correspond to different fifth parameters; or a fifth parameter corresponding to at least one processing subbranch in the plurality of processing subbranches is updated during model training.

In a possible implementation, at least two processing branches in the plurality of processing branches include a plurality of processing subbranches, and quantities of processing subbranches included in a plurality of processing branches in the at least two processing branches are different.

In a possible implementation, the processing module is further configured to:

train the neural network, to obtain an updated neural network, where the neural network further includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer; and

obtain a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

In a possible implementation, the neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer.

The processing module is specifically configured to:

obtain the third network layer based on the updated first network layer, the updated second network layer, and the updated fourth network layer, where the third weight is obtained by fusing the updated first weight, the updated second weight, and the updated fourth weight.

According to a sixth aspect, this application provides a data processing apparatus. The apparatus includes:

a training module, configured to train a neural network, to obtain an updated neural network, where the neural network includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer; and

a processing module, configured to obtain a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

In a possible implementation, the neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer.

The processing module is specifically configured to:

obtain the third network layer based on the updated first network layer, the updated second network layer, and the updated fourth network layer, where the third weight is obtained by fusing the updated first weight, the updated second weight, and the updated fourth weight.

According to a seventh aspect, an embodiment of this application provides a data processing apparatus. The apparatus may include a memory, a processor, and a bus system. The memory is configured to store a program, and the processor is configured to execute the program in the memory, to perform the method in any one of the first aspect and the optional implementations of the first aspect, the method in any one of the second aspect and the optional implementations of the second aspect, or the method in any one of the third aspect and the optional implementations of the third aspect.

According to an eighth aspect, an embodiment of this application provides a computer-readable storage medium. The computer-readable storage medium stores a computer program, and when the computer program is run on a computer, the computer is enabled to perform the method in any one of the first aspect and the optional implementations of the first aspect, the method in any one of the second aspect and the optional implementations of the second aspect, or the method in any one of the third aspect and the optional implementations of the third aspect.

According to a ninth aspect, an embodiment of this application provides a computer program. When the computer program is run on a computer, the computer is enabled to perform the method in any one of the first aspect and the optional implementations of the first aspect, the method in any one of the second aspect and the optional implementations of the second aspect, or the method in any one of the third aspect and the optional implementations of the third aspect.

According to a tenth aspect, this application provides a chip system. The chip system includes a processor, configured to support an execution device or a training device in implementing functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

**BRIEF DESCRIPTION OF DRAWINGS**

FIG. 1 is a diagram of a structure of an artificial intelligence main framework;

FIG. 2a and FIG. 2b each are a diagram of an application system architecture according to this application;

FIG. 3 is a diagram of an application scenario according to this application;

FIG. 4 is a diagram of an application scenario according to this application;

FIG. 5 is a diagram of a system architecture according to this application;

FIG. 6 is a diagram of a structure of a neural network according to an embodiment of this application;

FIG. 7 is a diagram of a structure of a neural network according to an embodiment of this application;

FIG. 8 shows a hardware structure of a chip according to an embodiment of this application;

FIG. 9 is a schematic flowchart of a data processing method according to an embodiment of this application;

FIG. 10 is a schematic flowchart of a data processing method according to an embodiment of this application;

FIG. 11 is a diagram of a structure of a network;

FIG. 12 is a diagram of a structure of a network;

FIG. 13 is a diagram of a network structure according to an embodiment;

FIG. 14 is a schematic flowchart of a data processing method according to an embodiment of this application;

FIG. 15 is a diagram of a network structure according to an embodiment;

FIG. 16 is a diagram of a structure of a data processing apparatus according to an embodiment of this application;

FIG. 17 is a diagram of a structure of a data processing apparatus according to an embodiment of this application;

FIG. 18 is a diagram of a structure of a data processing apparatus according to an embodiment of this application;

FIG. 19 is a diagram of a structure of an execution device according to an embodiment of this application;

FIG. 20 is a diagram of a structure of a training device according to an embodiment of this application; and

FIG. 21 is a diagram of a structure of a chip according to an embodiment of this application.

## DESCRIPTION OF EMBODIMENTS

The following describes embodiments of this application with reference to accompanying drawings in embodiments of this application. Terms used in implementations of this application are only used to explain specific embodiments of this application, but are not intended to limit this application.

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

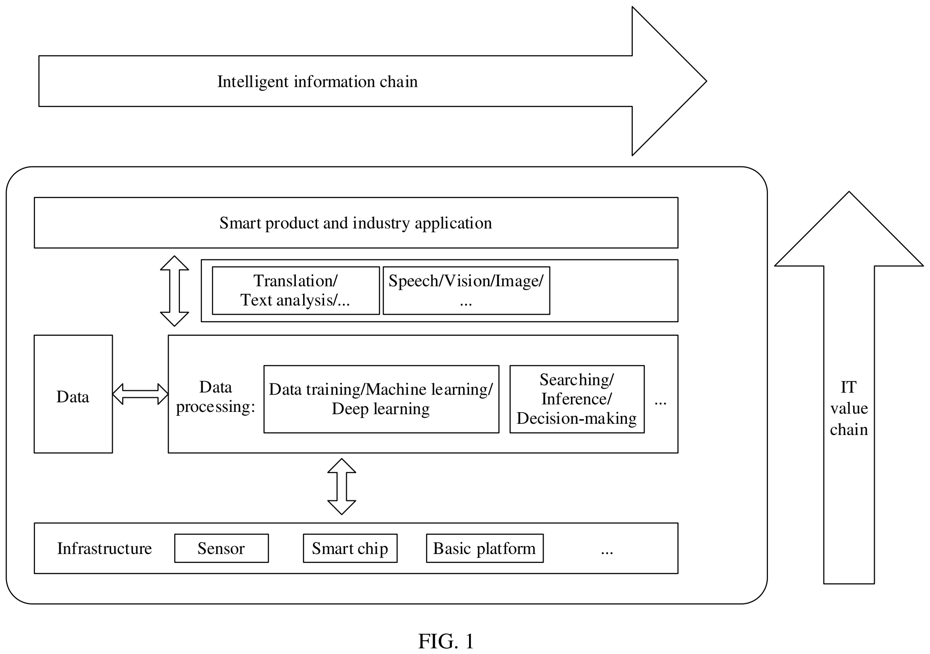

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" from an underlying infrastructure and information (providing and processing technology implementation) of artificial intelligence to an industrial ecology process of the system reflects value brought by artificial intelligence to the information technology industry.

(1) Infrastructure

The infrastructure provides computing capability support for an artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform includes related platforms such as a distributed computing framework and a network for assurance and support, including cloud storage and computing, and an interconnection and interworking network, and the like. For example, the sensor communicates with the outside to obtain data, and the data is provided to a smart chip in a distributed computing system provided by the basic platform for computing.

(2) Data

Data at an upper layer of an infrastructure indicates a data source in the field of artificial intelligence. The data relates to a graph, an image, a speech, and text, further relates to internet of things data of a conventional device, and includes service data of an existing system, and perception data such as force, displacement, a liquid level, a temperature, and humidity.

(3) Data processing

Data processing usually includes a manner such as data training, machine learning, deep learning, searching, inference, or decision-making.
Machine learning and deep learning may mean performing symbolic and formalized intelligent information modeling, extraction, preprocessing, training, and the like on data.
Inference is a process in which a human intelligent inference manner is simulated in a computer or an intelligent system, and machine thinking and problem resolving are performed based on formal information according to an inference control policy. A typical function is searching and matching.
Decision-making is a process in which a decision is made after intelligent information is inferred, and usually provides functions such as classification, ranking, and prediction.

(4) General capability

After data processing mentioned above is performed on data, some general capabilities may further be formed based on a data processing result. For example, the general capability may be an algorithm or a general system, for example, translation, text analysis, computer vision processing, speech recognition, and image recognition.

(5) Smart product and industry application

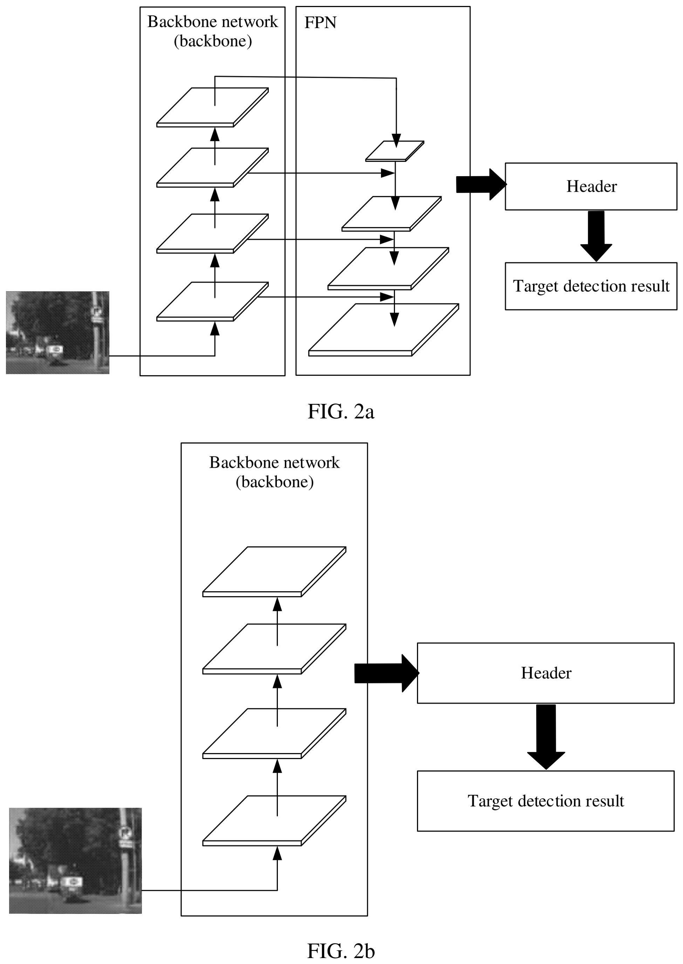

The smart product and industry application are a product and an application of an artificial intelligence system in various fields, and are package of overall artificial intelligence solutions, to productize and apply intelligent information decision-making. Application fields thereof mainly include a smart terminal, smart transportation, smart health care, autonomous driving, a smart city, and the like.
Embodiments of this application may be applied to the fields in which a neural network is required for implementation, such as a visual perception task, a speech-semantic-related natural language synthesis task, and an audio and video processing task. The neural network may include an activation operation implemented based on an activation function.
Each node in the neural network may include an activation function. If a group of inputs is given, the activation function may define an output of a node. An input of the neural network may be propagated through layers of nodes via activation functions, to calculate an output of the neural network.
For example, embodiments of this application may be applied to the fields in which a plurality of perception tasks need to be completed, such as driving assistance, autonomous driving, and a mobile phone terminal. FIG. 2a and FIG. 2b each are a diagram of an application system framework according to this application. Frame extraction is performed on a video to obtain a single picture, and the picture is sent to the neural network provided in embodiments of this application, to obtain information such as 2D information, 3D information, mask (mask) information, and key point information of an object of interest in the picture. These detection results are output to a post-processing module for processing, for example, sent to a planning and control unit in an autonomous driving system for decision-making, or sent to a mobile phone terminal for processing according to a beautification algorithm to obtain a beautified picture. The following briefly describes two application scenarios: an ADAS/ADS visual perception system and a beautification function of a mobile phone.

Application scenario 1: ADAS/ADS visual perception system

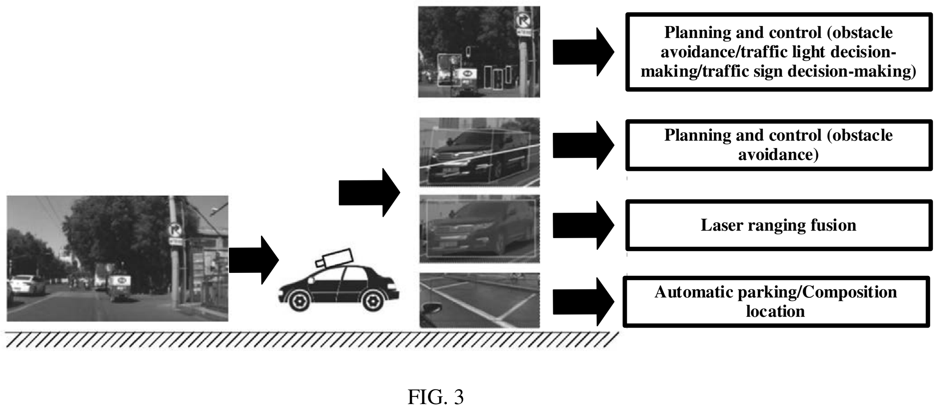

As shown in FIG. 3, in the ADAS and the ADS, a plurality of types of 2D targets need to be detected in real time, and include a dynamic obstacle (a pedestrian (Pedestrian), a cyclist (Cyclist), a tricycle (Tricycle), a car (Car), a truck (Truck), or a bus (Bus)), a static obstacle (a traffic cone (Traffic Cone), a traffic stick (Traffic Stick), a fire hydrant (Fire Hydrant), a motorcycle (Motorcycle), or a bicycle (Bicycle)), a traffic sign (Traffic Sign), a guide sign (Guide Sign), a billboard (Billboard), a red traffic light (TrafficLight_Red)/yellow traffic light (TrafficLight_Yellow)/green traffic light (TrafficLight_Green)/black traffic light (TrafficLight_Black), or a road sign (Road Sign). In addition, to accurately obtain a region occupied by the dynamic obstacle in 3D space, 3D estimation further needs to be performed on the dynamic obstacle, to output a 3D box. To fuse with data of a lidar, a mask of the dynamic obstacle needs to be obtained, to filter out laser point clouds that hit the dynamic obstacle. To accurately locate a parking space, four key points of the parking space need to be detected at the same time. For composition location, key points of a static target need to be detected. All or some of the foregoing functions may be completed based on the neural network corresponding to the technical solutions provided in embodiments of this application.

For example, the technical solutions provided in embodiments of this application may be applied to adaptive cruise in assisted driving and advanced assisted driving.

The adaptive cruise function in the ADAS needs to adaptively adjust a speed of an ego vehicle based on a location and speed of a front vehicle in a lane, to implement automatic cruise without collision. When there is no other traffic participant (target) in front of the ego vehicle in the lane, the ego vehicle moves forward based on a preset speed or a road speed limit. For example, when a perception system of the ego vehicle detects that another traffic participant enters the front of the lane, the ego vehicle automatically reduces the speed of the ego vehicle based on a location and the speed of the ego vehicle, to avoid collision caused by deceleration of the front vehicle.

For example, the neural network corresponding to the technical solutions provided in embodiments of this application may be applied to target trajectory prediction in autonomous assisted driving and surveillance.

Trajectory prediction is to perceive a road scenario via a camera, obtain information such as a location, an orientation, and a size of an important traffic participant in an environment according to a target detection algorithm, and obtain a movement speed and a movement direction of each target by accumulating a plurality of frames of detection results, to predict a future movement trajectory of the target, and is used as a basis for subsequent decision-making and control of an autonomous vehicle. For example, a future movement direction of a surrounding vehicle may be predicted for the autonomous vehicle. For example, in a surveillance scenario, future movement of a pedestrian may be predicted by detecting an orientation and a location of the pedestrian, to recognize possible people behavior in advance.

In the autonomous vehicle, fast detection and location are performed on a picture taken by a camera lens, to recognize locations of a pedestrian and the vehicle in the picture, which is critical to running of the autonomous vehicle. Because running of the autonomous vehicle requires a fast response speed, detection has a high requirement on real-time performance. Object detection used for pedestrian and vehicle detection is also completed based on the neural network. A nonlinearity enhancement activation function or a depth re-parameterization training solution provided in this application are applied to the neural network. For example, the nonlinearity enhancement activation function and the depth re-parameterization training solution provided in this application are applied to the neural network (for example, a shallow neural network), to improve accuracy of the neural network, replace an originally used deep network, and achieve a faster detection speed.

Application scenario 2: beautification function of a mobile phone

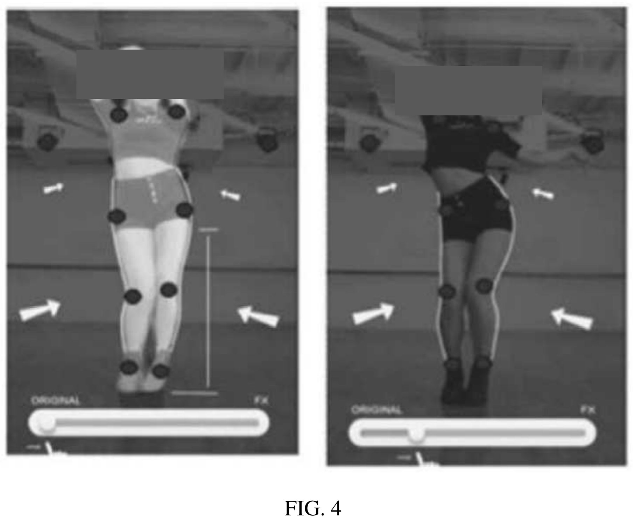

As shown in FIG. 4, in the mobile phone, a mask and a key point of a human body are detected based on a neural network according to a method provided in embodiments of this application, and a corresponding part of the human body may be zoomed in or zoomed out, for example, a waist slimming operation and a buttock beautification operation are performed, to output a beautified picture.

Application scenario 3: image classification scenario

After obtaining a to-be-classified image, an object recognition apparatus may obtain a category of an object in the to-be-classified image based on the neural network corresponding to the method provided in this application, and then may classify the to-be-classified image based on the category of the object in the to-be-classified image. A photographer takes many photos every day, such as photos of animals, photos of people, and photos of plants. According to the method in this application, the photos can be quickly classified based on content in the photos, and may be classified into photos including animals, photos including people, and photos including plants.

Application scenario 4: commodity classification

After obtaining an image of a commodity, an object recognition apparatus obtains a category of the commodity in the image of the commodity based on the neural network corresponding to the method provided in this application, and then classifies the commodity based on the category of the commodity. For a variety of commodities in a large shopping mall or a supermarket, the commodities can be classified by using the data processing method in this application, to reduce time overheads and labor costs.

Application scenario 5: face and identity authentication

Face recognition and identity authentication are very important technologies, and have great use value in a device like an airport security check device. Currently, a main face recognition method is performed based on a neural network, and a nonlinearity enhancement activation function provided in this application is applied to the neural network. For example, the nonlinearity enhancement activation function or a depth re-parameterization training solution provided in this application is applied to the neural network (for example, a shallow neural network), to improve accuracy of the neural network, and further implement faster face recognition than a deep network.

Application scenario 6: natural language processing (NLP)

A natural language (natural language) is a human language, and natural language processing (NLP) is processing of the human language. Natural language processing is a process of systematic analysis, understanding, and information extraction of text data in an intelligent and efficient manner. Through NLP and components of NLP, massive chunks of text data can be managed, or a large quantity of automated tasks can be performed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

For example, there may be the following several types of natural language processing tasks.

Sequence labeling: A model needs to provide a classification category for each word in a sentence based on context. For example, sequence labeling is Chinese word segmentation, part-of-speech tagging, named entity recognition, or semantic role labeling.

Classification task: A classification value is output for an entire sentence. For example, the classification task is text classification.

Sentence relation inference: Two sentences are given, and it is determined whether the two sentences have a nominal relation. For example, sentence relation inference is entailment, QA, semantic paraphrasing, or natural language inference.

Generative task: One piece of text is output, and another piece of text is generated. For example, the generative task is machine translation, text summarization, poem writing and sentence making, or picture description.

The following provides some natural language processing examples.

Word segmentation (word segmentation or word breaker, WB): Continuous natural language text is segmented into lexical sequences with semantic rationality and integrity, to eliminate a cross ambiguity.

Named entity recognition (named entity recognition, NER): Entities (a person, a place, an institution, time, works, and the like) having specific meanings in natural language text are recognized.

Part-of-speech tagging (part-speech tagging): A part-of-speech (noun, verb, adjective, or the like) is assigned to each word in natural language text. Dependency parsing (dependency parsing): Syntactic elements (subject, predicate, object, attributive, adverbial, complement, and the like) in a sentence are automatically analyzed, to eliminate a structural ambiguity.

Word vector and semantic similarity (word embedding & semantic similarity): Words are represented in a vectorized manner, and semantic similarity calculation is performed on the words based on vectorized representation, to resolve a problem of linguistic similarity between the words.

Text semantic similarity (text semantic similarity): Based on massive data in an entire network and a deep neural network technology, semantic similarity between pieces of text is calculated, to resolve a problem of text semantic similarity.

Machine translation is used as an example. In machine translation research, text or a speech is translated from one natural language into another natural language via a computer program. Most of existing solutions are performed based on a neural network. In this application, an activation function of the neural network in machine translation may be changed into a nonlinearity enhancement activation function. Optionally, in addition, a depth re-parameterization training solution may also be used, to greatly increase a translation speed and achieve a level of real-time translation.

Application scenario 7: voice wake-up

Wake-up is to wake up a device from a sleep state to a working state, and usually includes touch wake-up (lock screen button), scheduled wake-up (alarm), passive wake-up (phone), and the like. Voice wake-up is to switch the device from the sleep state to the working state in a voice manner, and can be applied to devices such as a mobile phone and a smart speaker. Currently, voice wake-up is usually performed based on a neural network. This application is also applicable to this scenario, to achieve a shorter wake-up time.

Embodiments of this application relate to massive application of a neural network. Therefore, for ease of understanding, the following first describes related terms and related concepts such as the neural network in embodiments of this application.

(1) Object recognition: A category of an object in an image is determined by using related methods such as image processing, machine learning, and computer graphics.
(2) Neural network

The neural network may include a neuron. The neuron may be an operation unit that uses $x_s$ and an intercept of 1 as an input. An output of the operation unit may be as follows:

$$ h_{W,b}\left(x\right) = f\left(W^{T}x\right) = f\left(\sum_{s=1}^{n} W_s x_s + b\right) \quad (1\text{-}1) $$

Herein, s=1, 2, ..., or n, n is a natural number greater than 1, $W_s$ is a weight of $x_s$, and b is a bias of the neuron. f is an activation function (activation function) of the neuron, and is used to introduce a nonlinear feature into the neural network, to convert an input signal in the neuron into an output signal. The output signal of the activation function may be used as an input of a next convolutional layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(3) Deep neural network

The deep neural network (Deep Neural Network, DNN) may be understood as a neural network having a plurality of hidden layers. There is no special metric standard for "a plurality of" herein. A multi-layer neural network and the deep neural network are essentially the same. The DNN is divided based on locations of different layers, and a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer. Although the DNN seems complex, the DNN is actually not complex in terms of work at each layer, and is simply expressed as the following linear relation expression: $\vec{y} = \alpha(W\vec{x} + \vec{b})$, where $\vec{x}$ is an input vector, $\vec{y}$ is an output vector, $\vec{b}$ is a bias vector, $W$ is a weight matrix (also referred to as a coefficient), and $\alpha(\ )$ is an activation function. At each layer, only such a simple operation is performed on the input vector $\vec{x}$, to obtain the output vector $\vec{y}$. Because the DNN includes a large quantity of layers, there are a large quantity of coefficients $W$ and a large quantity of bias vectors $\vec{b}$. How are specific parameters defined in the DNN? First, refer to the definition of the coefficient $W$. A three-layer DNN is used as an example. For example, a linear coefficient from a $4^{th}$ neuron at a second layer to a $2^{nd}$ neuron at a third layer is defined as $w_{24}^{3}$. The superscript 3 represents a layer at which the coefficient $W$ is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter $W$ at the input layer. In the deep neural network, more hidden layers make the network more capable of describing a complex case in the real world. Theoretically, a model with more parameters has higher complexity and a larger "capacity". It indicates that the model can complete a more complex learning task.

(4) Convolutional neural network (Convolutional neural Network, CNN): The convolutional neural network is a deep neural network with a convolutional structure. The convolutional neural network includes a feature extractor including a convolutional layer and a sampling sub-layer. The feature extractor may be considered as a filter. A convolution process may be considered as performing convolution by using a trainable filter and an input image or a convolution feature map (feature map). The convolutional layer is a neuron layer that is in the convolutional neural network and at which convolution processing is performed on an input signal. At the convolutional layer of the convolutional neural network, one neuron may be connected only to some neurons at a neighboring layer. One convolutional layer usually includes a plurality of feature maps, and each feature map may include some neurons that are in a rectangular arrangement. Neurons in a same feature map share a weight, and the weight shared herein is a convolution kernel. Weight sharing may be understood as that an image information extraction manner is irrelevant to a location. A principle implied herein is that statistical information of a part of an image is the same as that of another part. This means that image information learned in a part can also be used in another part. Therefore, image information obtained through same learning can be used for all locations on the image. At a same convolutional layer, a plurality of convolution kernels may be used to extract different image information. Usually, a larger quantity of convolution kernels indicates richer image information reflected in a convolution operation.

The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

(5) Back propagation algorithm

A convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is errorloss-centered back propagation motion intended to obtain an optimal parameter, for example, a weight matrix, of the super-resolution model.

(6) Loss function

In a process of training a deep neural network, because it is expected that an output of the deep neural network is as close as possible to a value that actually needs to be predicted, a current predicted value of the network may be compared with an actually expected target value, and then a weight vector at each layer of the neural network is updated based on a difference between the current predicted value and the target value (certainly, there is usually an initialization process before first updating, to be specific, a parameter is preconfigured for each layer of the deep neural network). For example, if the predicted value of the network is large, the weight vector is adjusted to decrease the predicted value, and adjustment is continuously performed, until the deep neural network can predict the actually expected target value or a value that is very close to the actually expected target value. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(7) Convolutional neural network

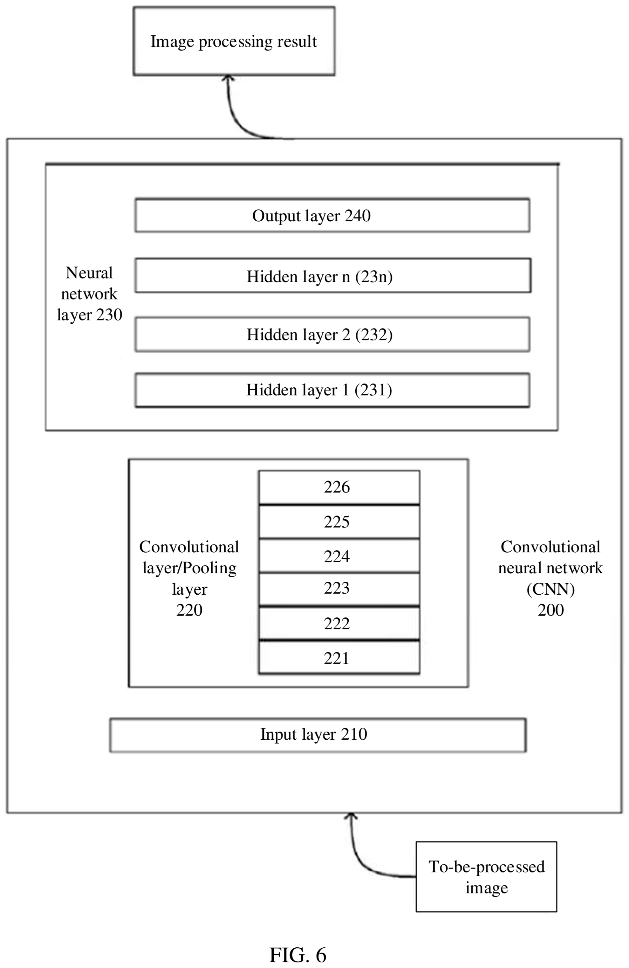

As shown in FIG. 6, a convolutional neural network (CNN) 100 may include an input layer 210, a convolutional layer/pooling layer 220 (the pooling layer is optional), and a neural network layer 230. The input layer 210 may obtain a to-be-processed image, and send the obtained to-be-processed image to the convolutional layer/pooling layer 220 and the subsequent neural network layer 230 for processing, to obtain a processing result of the image. The following describes in detail structures of the layers in the CNN 100 in FIG. 6.

Convolutional layer/Pooling layer 220

Convolutional layer

As shown in FIG. 6, the convolutional layer/pooling layer 220 may include, for example, layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer; and in another implementation, the layers 221 and 222 are convolutional layers, the layer 223 is a pooling layer, the layers 224 and 225 are convolutional layers, and the layer 226 is a pooling layer. To be specific, an output of a convolutional layer may be used as an input of a subsequent pooling layer, or may be used as an input of another convolutional layer to continue a convolution operation.

The following uses the convolutional layer 221 as an example to describe an internal working principle of one convolutional layer.

The convolutional layer 221 may include a plurality of convolution operators. The convolution operator is also referred to as a kernel. During image processing, the convolution operator functions as a filter that extracts specific information from an input image matrix. The convolution operator may essentially be a weight matrix, and the weight matrix is usually predefined. In a process of performing a convolution operation on an image, the weight matrix is usually used to process pixels at a granularity of one pixel (or two pixels, depending on a value of a stride (stride)) in a horizontal direction on the input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional image. The dimension herein may be understood as being determined based on the foregoing "plurality of". Different weight matrices may be used to extract different features from the image. For example, one weight matrix is used to extract edge information of the image, another weight matrix is used to extract a specific color of the image, and still another weight matrix is used to blur unnecessary noise in the image. Sizes of the plurality of weight matrices (rows×columns) are the same. Sizes of convolutional feature maps extracted from the plurality of weight matrices with the same size are also the same, and then the plurality of extracted convolutional feature maps with the same size are combined to form an output of the convolution operation.

Weight values in these weight matrices need to be obtained through massive training in actual application. Each weight matrix including weight values obtained through training may be used to extract information from the input image, so that the convolutional neural network 200 performs correct prediction.

When the convolutional neural network 200 has a plurality of convolutional layers, a larger quantity of general features are usually extracted at an initial convolutional layer (for example, the layer 221). The general features may also be referred to as low-level features. As a depth of the convolutional neural network 200 increases, a feature extracted at a subsequent convolutional layer (for example, the layer 226), for example, a high-level semantic feature, is more complex. A feature with higher semantics is more applicable to a to-be-resolved problem.

Pooling layer

Because a quantity of training parameters usually needs to be reduced, a pooling layer usually needs to be periodically introduced after a convolutional layer. For the layers 221 to 226 in the layer 220 shown in FIG. 6, one convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a small size. The average pooling operator may be used to calculate pixel values in the image within a specific range, to generate an average value as a result of average pooling. The maximum pooling operator may be used to select a pixel with a maximum value within a specific range as a maximum pooling result. In addition, similar to that a size of a weight matrix at a convolutional layer needs to be related to a size of an image, an operator at the pooling layer also needs to be related to a size of an image. A size of a processed image output from the pooling layer may be less than a size of an image input to the pooling layer. Each pixel in the image output from the pooling layer represents an average value or a maximum value of a corresponding sub-region of the image input to the pooling layer.

Neural network layer 230

After processing performed at the convolutional layer/pooling layer 220, the convolutional neural network 200 is not ready to output required output information. As described above, at the convolutional layer/pooling layer 220, only a feature is extracted, and parameters brought by an input image are reduced. However, to generate final output information (required type information or other related information), the convolutional neural network 200 needs to use the neural network layer 230 to generate an output of one required type or a group of required types. Therefore, the neural network layer 230 may include a plurality of hidden layers (231, 232, ..., and 23n shown in FIG. 6) and an output layer 240. Parameters included in the plurality of hidden layers may be obtained through pre-training based on related training data of a specific task type, for example, the task type may include image recognition, image classification, super-resolution image reconstruction, and the like.

At the neural network layer 230, the plurality of hidden layers are followed by the output layer 240, namely, a last layer of the entire convolutional neural network 200. The output layer 240 has a loss function similar to a categorical cross entropy, and the loss function is specifically configured to calculate a prediction error. Once forward propagation (for example, propagation in a direction from 210 to 240 in FIG. 6 is forward propagation) of the entire convolutional neural network 200 is completed, back propagation (for example, propagation in a direction from 240 to 210 in FIG. 6 is back propagation) is started to update a weight value and a bias of each layer mentioned above, to reduce a loss of the convolutional neural network 200 and an error between a result output by the convolutional neural network 200 through the output layer and an ideal result.

It should be noted that the convolutional neural network 210 shown in FIG. 6 is merely used as an example of the convolutional neural network. The convolutional neural network may alternatively exist in a form of another network model in specific application.

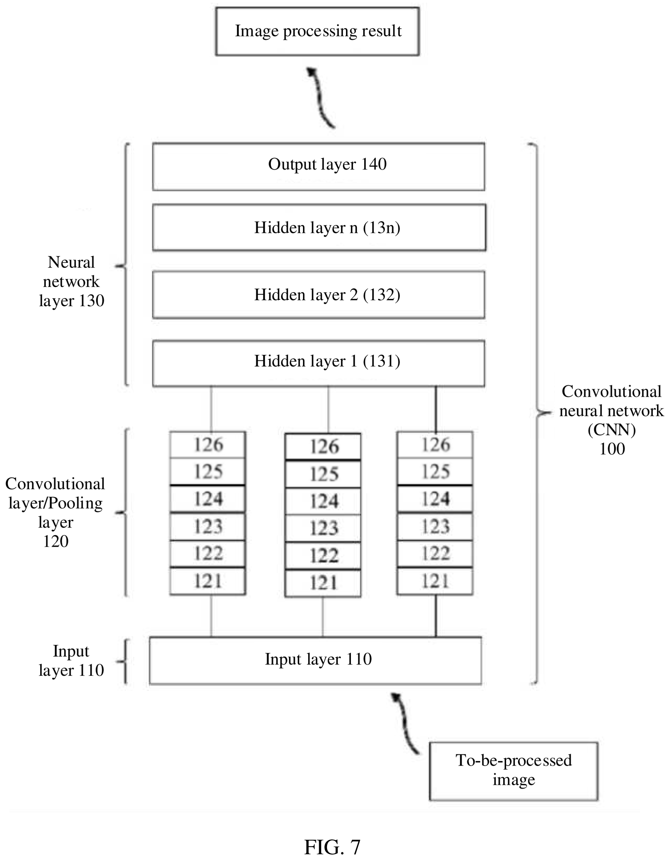

A structure of a neural network specifically used in an image processing method in embodiments of this application may be shown in FIG. 7. In FIG. 7, a convolutional neural network (CNN) 100 may include an input layer 110, a convolutional layer/pooling layer 120 (the pooling layer is optional), and a neural network layer 130. Compared with FIG. 6, in FIG. 7, at the convolutional layer/pooling layer 120, a plurality of convolutional layers/pooling layers are in parallel, and extracted features are input to the neural network layer 130 for processing.

It should be noted that the convolutional neural networks shown in FIG. 6 and FIG. 7 are merely used as examples of two possible convolutional neural networks used in the image processing method in embodiments of this application. In specific application, the convolutional neural network used in the image processing method in embodiments of this application may alternatively exist in a form of another network model.

In addition, a structure of a convolutional neural network obtained by using a neural network structure search method in embodiments of this application may be shown as the structure of the convolutional neural network in FIG. 6 and the structure of the convolutional neural network FIG. 7.

The following describes a system architecture provided in embodiments of this application.

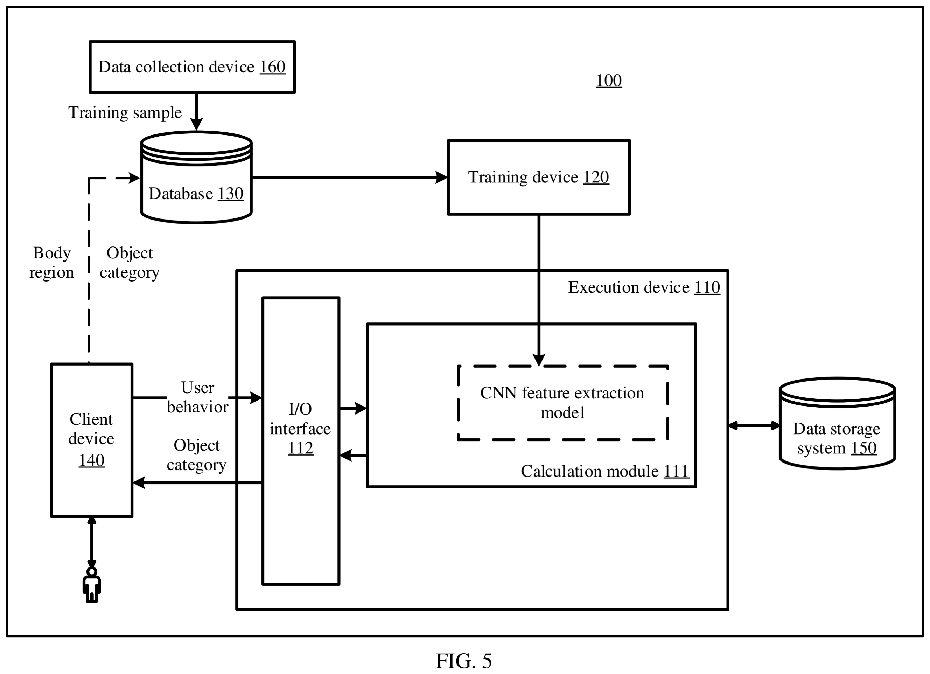

Refer to FIG. 5. An embodiment of this application provides a system architecture 100. As shown in the system architecture 100, a data collection device 160 is configured to collect training data, and store the training data into a database 130. A training device 120 performs training based on the training data maintained in the database 130, to obtain a machine learning model. The machine learning model may include a neural network corresponding to the method provided in this application. It should be noted that, in actual application, the training data maintained in the database 130 is not necessarily all collected by the data collection device 160, and may be received from another device.

A target model/rule obtained through training by the training device 120 may be applied to different systems or devices, for example, an execution device 110 shown in FIG. 5. The execution device 110 may be a terminal, for example, a mobile phone terminal, a tablet computer, a laptop computer, augmented reality (augmented reality, AR)/virtual reality (virtual reality, VR), or a vehicle-mounted terminal, or may be a server, a cloud, or the like. In FIG. 5, an input/output (input/output, I/O) interface 112 is configured for the execution device 110, and is configured to exchange data with an external device. A user may input data to the I/O interface 112 through a client device 140.

In a process in which the execution device 110 preprocesses the input data, or in a process in which a calculation module 111 of the execution device 110 performs related processing such as calculation (for example, performs function implementation of the machine learning model in this application), the execution device 110 may invoke data, code, and the like in a data storage system 150 for corresponding processing, and may further store, into the data storage system 150, data, an instruction, and the like that are obtained through corresponding processing.

Finally, the I/O interface 112 returns a processing result to the client device 140, to provide the processing result to the user.

It should be noted that, for different targets or different tasks, the training device 120 may generate corresponding target models/rules based on different training data. The corresponding target models/rules may be used to achieve the foregoing targets or complete the foregoing tasks, to provide a required result for the user.

In a case shown in FIG. 5, the user may manually provide input data and the user may manually provide the input data in an interface provided by the I/O interface 112. In another case, the client device 140 may automatically send input data to the I/O interface 112. If the client device 140 is required to automatically send the input data, the client device 140 needs to obtain authorization from the user, the user may set corresponding permission on the client device 140. The user may view, on the client device 140, a result output by the execution device 110. The result may be specifically presented in a specific form of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data into the database 130. Certainly, the client device 140 may alternatively not perform collection, but the I/O interface 112 directly stores, into the database 130 as new sample data, the input data input to the I/O interface 112 and the output result output from the I/O interface 112 that are shown in the figure.

It should be noted that FIG. 5 is merely a diagram of the system architecture according to an embodiment of this application. A location relationship between a device, a component, a module, and the like shown in the figure constitutes no limitation. For example, in FIG. 5, the data storage system 150 is an external memory relative to the execution device 110. In another case, the data storage system 150 may alternatively be disposed in the execution device 110.

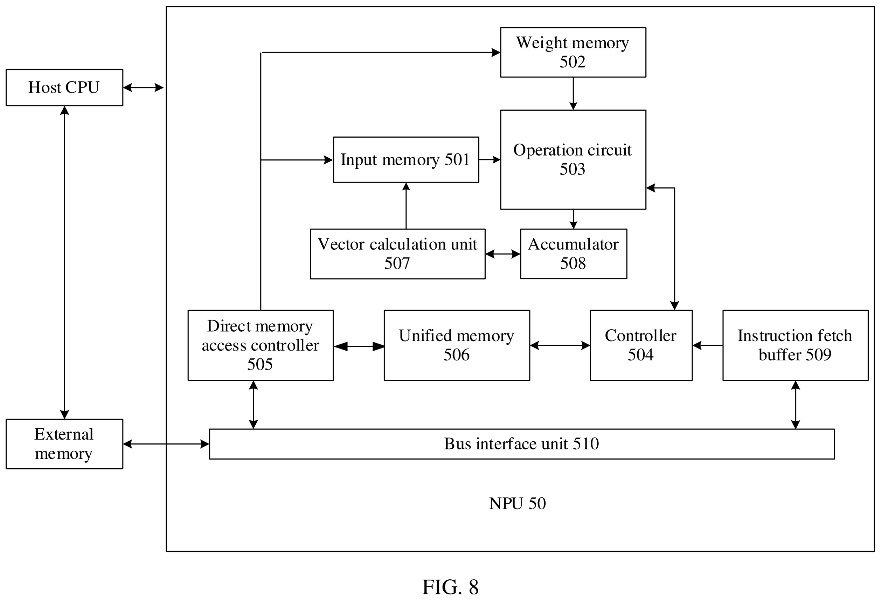

FIG. 8 shows a hardware structure of a chip according to an embodiment of this application. The chip includes a neural network processing unit NPU 50. The chip may be disposed in the execution device 110 shown in FIG. 5, to complete calculation work of the calculation module 111. Alternatively, the chip may be disposed in the training device 120 shown in FIG. 5, to complete training work of the training device 120 and output a target model/rule.

The neural network processing unit NPU 50 is mounted to a host central processing unit (central processing unit, CPU) (host CPU) as a coprocessor, and the host CPU assigns a task. A core part of the NPU is an operation circuit 503. A controller 504 controls the operation circuit 503 to extract data in a memory (a weight memory or an input memory) and perform an operation.

In some implementations, the operation circuit 503 internally includes a plurality of processing units (process engine, PE). In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there is an input matrix A, a weight matrix B, and an output matrix C. The operation circuit fetches, from a weight memory 502, data corresponding to the matrix B, and buffers the data on each PE in the operation circuit. The operation circuit fetches data of the matrix A from an input memory 501 to perform a matrix operation on the matrix B, and stores an obtained partial result or an obtained final result of the matrix into an accumulator (accumulator) 508.

A vector calculation unit 507 may perform further processing on the output of the operation circuit, for example, vector multiplication, vector addition, an exponential operation, a logarithmic operation, and value comparison. For example, the vector calculation unit 507 may be configured to perform network calculation at a non-convolutional/non-FC layer in a neural network, for example, pooling (pooling), batch normalization (batch normalization), and local response normalization (local response normalization).

In some implementations, the vector calculation unit 507 can store a processed output vector in a unified memory 506. For example, the vector calculation unit 507 may apply a nonlinear function to the output of the operation circuit 503, for example, a vector of an accumulated value, to generate an activation value. In some implementations, the vector calculation unit 507 generates a normalized value, a combined value, or both a normalized value and a combined value. In some implementations, the processed output vector can be used as an activation input to the operation circuit 503, for example, used in a subsequent layer in the neural network.

The unified memory 506 is configured to store input data and output data.

For weight data, a direct memory access controller 505 (direct memory access controller, DMAC) transfers input data in an external memory to the input memory 501 and/or the unified memory 506, stores weight data in the external memory into the weight memory 502, and stores the data in the unified memory 506 into the external memory.

A bus interface unit (bus interface unit, BIU) 510 is configured to implement interaction between the host CPU, the DMAC, and an instruction fetch buffer 509 through a bus.

The instruction fetch buffer (instruction fetch buffer) 509 connected to the controller 504 is configured to store instructions used by the controller 504.

The controller 504 is configured to invoke the instructions buffered in the instruction fetch buffer 509, to control a working process of the operation accelerator.

Optionally, in this application, the input data herein is a picture, and the output data is information such as 2D information, 3D information, mask information, and key point information of an object of interest in the picture.

Generally, the unified memory 506, the input memory 501, the weight memory 502, and the instruction fetch buffer 509 are all on-chip (On-Chip) memories. The external memory is a memory outside the NPU, and the external memory may be a double data rate synchronous dynamic random access memory (double data rate synchronous dynamic random access memory, DDR SDRAM), a high bandwidth memory (high bandwidth memory, HBM), or another readable and writable memory.

The execution device 110 in FIG. 5 described above can perform steps of the data processing method in embodiments of this application. The CNN model shown in FIG. 6, the CNN model shown in FIG. 7, and the chip shown in FIG. 8 may also be configured to perform steps of the data processing method in embodiments of this application. The following describes in detail the data processing method in embodiments of this application with reference to accompanying drawings.

Embodiments of this application may be applied to an activation unit in a neural network. The activation unit includes a plurality of processing branches, each processing branch corresponds to one activation function, and each processing branch is configured to perform activation processing on input data based on the corresponding activation function.

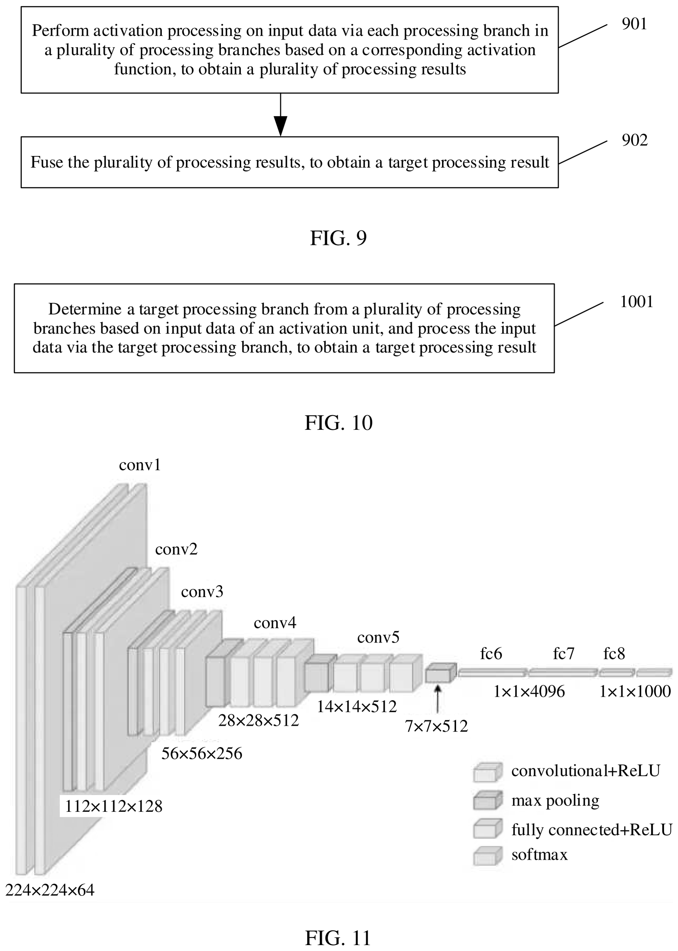

As shown in FIG. 9, the data processing method provided in this embodiment of this application may include the following steps.

901: Perform activation processing on input data via each processing branch in the plurality of processing branches based on the corresponding activation function, to obtain a plurality of processing results.

902: Fuse the plurality of processing results, to obtain a target processing result.

It is assumed that an existing activation function is $y = A(x)$, where $x$ is an input of the activation function, $y$ is an output of the activation function, and A(·) may be any activation function such as ReLU or Sigmoid. In this embodiment of this application, a nonlinearity enhancement activation function is obtained by fusing a plurality of activation functions, to increase nonlinearity of the function. For example, the obtained nonlinearity enhancement activation function may be written as:

$$y = \widehat{A}(x) = \sum_{i=0}^{n} A_i(x).$$

Herein, n represents a quantity of summations. $A_i$ may be any activation function such as ReLU or Sigmoid, and all $A_i$ may be the same or different.

It should be understood that only some of n branches may be implemented according to the foregoing formula. This is not limited herein.

In a possible implementation, at least one processing branch in the plurality of processing branches corresponds to a first parameter.

Performing activation processing on input data via each processing branch in the plurality of processing branches based on the corresponding activation function, to obtain the plurality of processing results includes: performing activation processing on a sum result of the input data and the first parameter via the at least one processing branch based on the corresponding activation function, to obtain a processing result of the at least one processing branch.

It is assumed that an existing activation function is y = A(x), where x is an input of the activation function, y is an output of the activation function, and A(·) may be any activation function such as ReLU or Sigmoid. In this embodiment of this application, it is proposed that a nonlinearity enhancement activation function is obtained by fusing a plurality of activation functions, to increase nonlinearity of the activation function. For example, the obtained nonlinearity enhancement activation function may be written as:

$$y = \widehat{A}(x) = \sum_{i=0}^{n} A_i(x + b_i).$$

Herein, $b_i$ is a bias (the first parameter), and n represents a quantity of summations. $A_i$ may be any existing activation function such as ReLU or Sigmoid, and all $A_i$ may be the same or different.

It should be understood that only some of n branches may be implemented according to the foregoing formula. This is not limited herein.

In a possible implementation, at least two processing branches in the plurality of processing branches correspond to different first parameters; or a first parameter corresponding to at least one processing branch in the plurality of processing branches is updated during model training.

In a possible implementation, at least one processing branch in the plurality of processing branches corresponds to a second parameter, and weighted summation may be performed on the plurality of processing results based on a second parameter that corresponds to each processing branch in the at least one processing branch and that is used as a weight, to obtain the target processing result.

It is assumed that an existing activation function is y = A(x), where x is an input of the activation function, y is an output of the activation function, and A(·) may be any activation function such as ReLU or Sigmoid. In this embodiment of this application, it is proposed that a nonlinearity enhancement activation function is obtained by performing weighted summation on a plurality of activation functions, to increase nonlinearity of the function.

For example, the obtained nonlinearity enhancement activation function may be written as:

$$y = \widehat{A}(x) = \sum_{i=0}^{n} a_i A_i(x).$$

In a possible implementation, at least two processing branches in the plurality of processing branches correspond to different second parameters; or a second parameter corresponding to at least one processing branch in the plurality of processing branches is updated during model training.

In a possible implementation, at least one processing branch in the plurality of processing branches is configured to perform activation processing on a product result of the input data and a corresponding third parameter based on the corresponding activation function.

It is assumed that an existing activation function is y = A(x), where x is an input of the activation function, y is an output of the activation function, and A(·) may be any activation function such as ReLU or Sigmoid. In this embodiment of this application, it is proposed that a nonlinearity enhancement activation function is obtained by performing weighted summation on a plurality of activation functions, to increase nonlinearity of the function.

For example, the obtained nonlinearity enhancement activation function may be written as:

$$y = \widehat{A}(x) = \sum_{i=0}^{n} A_i(c_i x).$$

It should be understood that only some of n branches may be implemented according to the foregoing formula. This is not limited herein.

In a possible implementation, at least two processing branches in the plurality of processing branches correspond to different third parameters; or a third parameter corresponding to at least one processing branch in the plurality of processing branches is updated during model training.

It should be understood that any branch in the plurality of processing branches may be designed based on an activation function corresponding to at least one of the first parameter, the second parameter, and the third parameter.

For example, a processing branch in the obtained nonlinearity enhancement activation function may be written as:

$$a_i A_i(c_i x).$$

For example, a processing branch in the obtained nonlinearity enhancement activation function may be written as:

$$a_i A_i(x + b_i).$$

For example, a processing branch in the obtained nonlinearity enhancement activation function may be written as:

$$A_i(c_i x + b_i).$$

For example, a processing branch in the obtained nonlinearity enhancement activation function may be written as:

$$a_i A_i(c_i x + b_i).$$

The data processing method provided in this embodiment of this application includes: performing activation processing on the input data via each processing branch in the plurality of processing branches based on the corresponding activation function, to obtain the plurality of processing results; and fusing the plurality of processing results, to obtain the target processing result. In the foregoing manner, the nonlinearity enhancement activation function is obtained by fusing the plurality of activation functions, to increase the nonlinearity of the activation function, and further improve network accuracy.

Embodiments of this application may be applied to an activation unit in a neural network. The activation unit includes a plurality of processing branches, each processing branch corresponds to one activation function, and each processing branch is configured to perform activation processing on input data based on the corresponding activation function.

As shown in FIG. 10, a data processing method provided in this embodiment of this application may include the following steps.

1001: Determine a target processing branch from the plurality of processing branches based on input data of the activation unit; and

perform activation processing on the input data via the target processing branch based on a corresponding activation function, to obtain a target processing result.

In other words, when the input data is processed, the activation function may be used to: determine, from the plurality of processing branches based on a value of the input data, a processing branch used for a current activation operation (that is, the target processing branch), and process the input data via the determined target processing branch, to obtain the target processing result.

In the foregoing manner, activation functions may be stacked for nonlinearity, to increase nonlinearity of the activation function, and further improve network accuracy.

In a possible implementation, different processing branches in the plurality of processing branches correspond to different value ranges, and a processing branch whose corresponding value range includes the input data may be determined from the plurality of processing branches as the target processing branch based on the input data of the activation unit.

For example, an obtained nonlinearity enhancement activation function may be written as:

$$y = \widehat{A}(x) = \begin{cases} A_0(x) & if \ \ x < c_0 \\ A_1(x) & if \ \ c_0 \leq x < c_1 \\ \quad \cdots \\ A_n(x) & if \ \ c_{n-1} \leq x < c_n \\ A_{n+1}(x) & if \ \ x \geq c_n \end{cases}.$$

Herein, $A_i$ may be any existing activation function such as ReLU or Sigmoid, and all $A_i$ may be the same or different.

At least one processing branch in the plurality of processing branches may be implemented via any processing branch in the embodiment corresponding to FIG. 9, or at least one processing branch in the plurality of processing branches may be implemented by fusing any plurality of processing branches in the embodiment corresponding to FIG. 9. Separate descriptions are provided below.

In a possible implementation, each processing branch is configured to perform activation processing on a sum result of the input data and a corresponding first parameter based on the corresponding activation function.

It is assumed that an existing activation function is y = A(x), where x is an input of the activation function, y is an output of the activation function, and A(·) may be any activation function such as ReLU or Sigmoid. In this embodiment of this application, it is proposed that a nonlinearity enhancement activation function is obtained by fusing a plurality of activation functions, to increase nonlinearity of the activation function. For example, the obtained nonlinearity enhancement activation function may be written as:

$$y = \widehat{A}(x) = \begin{cases} A_0(x + b_0) & if \ \ x < c_0 \\ A_1(x + b_1) & if \ \ c_0 \leq x < c_1 \\ \quad \cdots \\ A_n(x + b_n) & if \ \ c_{n-1} \leq x < c_n \\ A_{n+1}(x + b_{n+1}) & if \ \ x \geq c_n \end{cases}.$$

Herein, $A_i$ may be any existing activation function such as ReLU or Sigmoid, and all $A_i$ may be the same or different.

It should be understood that only some of n branches may be implemented according to the foregoing formula. This is not limited herein.

In a possible implementation, at least two processing branches in the plurality of processing branches correspond to different first parameters; or a first parameter corresponding to at least one processing branch in the plurality of processing branches is updated during model training.

In a possible implementation, at least one processing branch in the plurality of processing branches corresponds to a second parameter; the input data may be processed via the target processing branch, to obtain a processing result of activation processing; and a second parameter that corresponds to the target processing branch and that is used as a weight is fused with the processing result, to obtain the target processing result.

It is assumed that an existing activation function is y = A(x), where x is an input of the activation function, y is an output of the activation function, and A(·) may be any activation function such as ReLU or Sigmoid. In this embodiment of this application, it is proposed that a nonlinearity enhancement activation function is obtained by fusing a plurality of activation functions, to increase nonlinearity of the activation function. For example, the obtained nonlinearity enhancement activation function may be written as:

$$y = \widehat{A}(x) = \begin{cases} a_0 \ A_0(x) & if \ \ x < c_0 \\ a_1 A_1(x) & if \ \ c_0 \leq x < c_1 \\ \quad \cdots \\ a_n A_n(x) & if \ \ c_{n-1} \leq x < c_n \\ a_{n+1} A_{n+1}(x) & if \ \ x \geq c_n \end{cases}.$$

Herein, $A_i$ may be any existing activation function such as ReLU or Sigmoid, and all $A_i$ may be the same or different.

It should be understood that only some of n branches may be implemented according to the foregoing formula. This is not limited herein.

In a possible implementation, at least two processing branches in the plurality of processing branches correspond to different second parameters; or a second parameter corresponding to at least one processing branch in the plurality of processing branches is updated during model training.

In a possible implementation, at least one processing branch in the plurality of processing branches is configured to perform activation processing on a product result of the input data and a corresponding third parameter based on a corresponding activation function.

It is assumed that an existing activation function is y = A(x), where x is an input of the activation function, y is an output of the activation function, and A(·) may be any activation function such as ReLU or Sigmoid. In this embodiment of this application, it is proposed that a nonlinearity enhancement activation function is obtained by fusing a plurality of activation functions, to increase nonlinearity of the activation function. For example, the obtained nonlinearity enhancement activation function may be written as:

$$y = \widehat{A}(x) = \begin{cases} A_0(c_0 x) & if \ \ x < c_0 \\ A_1(c_1 x) & if \ \ c_0 \leq x < c_1 \\ \quad \cdots \\ A_n(c_n x) & if \ \ c_{n-1} \leq x < c_n \\ A_{n+1}(c_{n+1} x) & if \ \ x \geq c_n \end{cases}.$$

Herein, $A_i$ may be any existing activation function such as ReLU or Sigmoid, and all $A_i$ may be the same or different.

It should be understood that only some of n branches may be implemented according to the foregoing formula. This is not limited herein.

In a possible implementation, at least two processing branches in the plurality of processing branches correspond to different third parameters; or a third parameter corresponding to at least one processing branch in the plurality of processing branches is updated during model training.

In a possible implementation, at least one processing branch in the plurality of processing branches includes a plurality of processing subbranches, each processing subbranch corresponds to one activation function, and each processing subbranch is configured to perform activation processing on input data based on the corresponding activation function. When the target processing branch includes a plurality of processing subbranches, the input data may be processed via each processing branch in the plurality of processing subbranches included in the target processing branch, to obtain a plurality of processing results of activation processing; and the plurality of processing results are fused, to obtain a target processing result.

It is assumed that an existing activation function is y = A(x), where x is an input of the activation function, y is an output of the activation function, and A(·) may be any activation function such as ReLU or Sigmoid. In this embodiment of this application, it is proposed that a nonlinearity enhancement activation function is obtained by fusing a plurality of activation functions, to increase nonlinearity of the activation function. For example, the obtained nonlinearity enhancement activation function may be written as:

$$y = \widehat{A}(x) = \begin{cases} \sum_{i=0}^{n(0)} A_{0,i}(x) & if \ \ x < c_0 \\ \sum_{i=0}^{n(1)} A_{1,i}(x) & if \ \ c_0 \leq x < c_1 \\ \quad \cdots \\ \sum_{i=0}^{n(n)} A_{n,i}(x) & if \ \ c_{n-1} \leq x < c_n \\ \sum_{i=0}^{n(n+1)} A_{n+1,i}(x) & if \ \ x \geq c_n \end{cases}.$$

Herein, $A_i$ may be any existing activation function such as ReLU or Sigmoid, and all $A_i$ may be the same or different.

It should be understood that only some of n branches may be implemented according to the foregoing formula. This is not limited herein.

In a possible implementation, at least one processing subbranch in the plurality of processing subbranches is configured to perform activation processing on a sum result of the input data and a corresponding fourth parameter based on a corresponding activation function.

$$y = \widehat{A}(x) = \begin{cases} \sum_{i=0}^{n(0)} A_{0,i}(x + b_{0,i}) & if \ \ x < c_0 \\ \sum_{i=0}^{n(1)} A_{1,i}(x + b_{1,i}) & if \ \ c_0 \leq x < c_1 \\ \quad \cdots \\ \sum_{i=0}^{n(n)} A_{n,i}(x + b_{n,i}) & if \ \ c_{n-1} \leq x < c_n \\ \sum_{i=0}^{n(n+1)} A_{n+1,i}(x + b_{1,i}) & if \ \ x \geq c_n \end{cases}.$$

Herein, $A_i$ may be any existing activation function such as ReLU or Sigmoid, and all $A_i$ may be the same or different.

It should be understood that only some of n branches may be implemented according to the foregoing formula. This is not limited herein.

In a possible implementation, at least two processing subbranches in the plurality of processing subbranches correspond to different fourth parameters; or a fourth parameter corresponding to at least one processing subbranch in the plurality of processing subbranches is updated during model training.

In a possible implementation, each processing subbranch corresponds to a fifth parameter, and weighted summation may be performed on the plurality of processing results based on the fifth parameter that corresponds to each processing subbranch and that is used as a weight, to obtain a target processing result.

It is assumed that an existing activation function is y = A(x), where x is an input of the activation function, y is an output of the activation function, and A(·) may be any activation function such as ReLU or Sigmoid. In this embodiment of this application, it is proposed that a nonlinearity enhancement activation function is obtained by fusing a plurality of activation functions, to increase nonlinearity of the activation function. For example, the obtained nonlinearity enhancement activation function may be written as:

$$y = \widehat{A}(x) = \begin{cases} \sum_{i=0}^{n(0)} a_{0,i} A_{0,i}(x) & if \ \ x < c_0 \\ \sum_{i=0}^{n(1)} A_{1,i}(x) & if \ \ c_0 \leq x < c_1 \\ \cdots \\ \sum_{i=0}^{n(n)} A_{n,i}(x) & if \ \ c_{n-1} \leq x < c_n \\ \sum_{i=0}^{n(n+1)} A_{n+1,i}(x) & if \ \ x \geq c_n \end{cases}.$$

Herein, $A_i$ may be any existing activation function such as ReLU or Sigmoid, and all $A_i$ may be the same or different.

It should be understood that only some of n branches may be implemented according to the foregoing formula. This is not limited herein.

In a possible implementation, at least two processing subbranches in the plurality of processing subbranches correspond to different fifth parameters; or a fifth parameter corresponding to at least one processing branch in the plurality of processing subbranches is updated during model training.

In a possible implementation, at least one processing subbranch in the plurality of processing subbranches is configured to perform activation processing on a product result of the input data and a corresponding sixth parameter based on a corresponding activation function.

It is assumed that an existing activation function is y = A(x), where x is an input of the activation function, y is an output of the activation function, and A(·) may be any activation function such as ReLU or Sigmoid. In this embodiment of this application, it is proposed that a nonlinearity enhancement activation function is obtained by fusing a plurality of activation functions, to increase nonlinearity of the activation function. For example, the obtained nonlinearity enhancement activation function may be written as:

$$y = \widehat{A}(x) = \begin{cases} \sum_{i=0}^{n(0)} A_{0,i}(c_0 x) & if \ \ x < c_0 \\ \sum_{i=0}^{n(1)} A_{1,i}(c_1 x) & if \ \ c_0 \leq x < c_1 \\ \cdots \\ \sum_{i=0}^{n(n)} A_{n,i}(c_n x) & if \ \ c_{n-1} \leq x < c_n \\ \sum_{i=0}^{n(n+1)} A_{n+1,i}(c_{n+1} x) & if \ \ x \geq c_n \end{cases}.$$

Herein, $A_i$ may be any existing activation function such as ReLU or Sigmoid, and all $A_i$ may be the same or different.

It should be understood that only some of n branches may be implemented according to the foregoing formula. This is not limited herein.

In a possible implementation, at least two processing branches in the plurality of processing subbranches correspond to different sixth parameters; or a sixth parameter corresponding to at least one processing subbranch in the plurality of processing subbranches is updated during model training.

In a possible implementation, at least two processing branches in the plurality of processing branches include a plurality of processing subbranches, and quantities of processing subbranches included in a plurality of processing branches in the at least two processing branches are different.

Sets of functions $A_{j,i}$ for weighting in different segments may be the same or may be different. For example, in a first segment that satisfies *if* x < $c_0$, weighting is performed based on $n(0) + 1$ existing activation functions, to obtain a nonlinearity enhancement activation function in the segment; and in a second segment that satisfies *if* $c_0 \leq x < c_1$, weighting is performed based on $n(1) + 1$ existing activation functions, to obtain a nonlinearity enhancement activation function in the segment. A set of the $n(0) + 1$ existing activation functions used in the first segment and the set of the $n(0) + 1$ existing activation functions used in the first segment may be the same or different, or may partially overlap. In addition, different segments in a nonlinearity enhancement activation function form 3 may also be mixed in any single-segment form in the foregoing formula.

In addition, only at least some segments may be stacked in a weighted form, and the existing activation function is still used for the other segments.

After any nonlinearity enhancement activation function form is obtained, the nonlinearity enhancement activation function may be used in the neural network to replace an original activation function, to improve network accuracy. It should be noted that a same nonlinearity enhancement activation function form may be used in different layers, or different nonlinearity enhancement activation function forms may be used in different layers.

The data processing method provided in this embodiment of this application is applied to the activation unit in the neural network. The activation unit includes the plurality of processing branches, and each processing branch corresponds to one activation function. The method includes: determining the target processing branch from the plurality of processing branches based on the input data of the activation unit; and performing activation processing on the input data via the target processing branch based on the corresponding activation function, to obtain the target processing result. In the foregoing manner, activation functions may be stacked for nonlinearity, to increase nonlinearity of the activation function, and further improve network accuracy.

As described above, a core module in this application is a neural network module, and the neural network module further includes a nonlinearity enhancement activation function module provided in embodiments of this application. During neural network training, a depth re-parameterization training solution provided in this application may be applied. The following describes a specific embodiment in which a neural network based on a nonlinearity enhancement activation function module (or may be referred to as an activation unit) provided in this application is used and face recognition is performed based on the neural network using a depth re-parameterization training solution.

To achieve a result of face recognition, in this embodiment, the neural network module performs an operation on an input image, to obtain a final face detection and classification result, and finally the detection result may be output. The following describes in detail the nonlinearity enhancement activation function module and other modules in embodiments.

About the neural network module

The neural network module is divided into two submodules: the nonlinearity enhancement activation function module and other submodules.

The nonlinearity enhancement activation function may be used in any neural network-based image classification model. The following uses AlexNet as an example to describe application of this embodiment of this application to an image classification CNN model. A network structure of AlexNet is shown in FIG. 11, and includes eight convolutional layers. Sizes of sliding windows of the convolutional layers are respectively 11×11, 5×5, 3×3, 3×3, 3×3, 1×1, and 1×1, quantities of input channels are respectively 3, 96, 256, 384, 384, 256, 4096, and 4096, and quantities of output channels are respectively 96, 256, 384, 384, 256, 4096, 4096, and 1000. Each convolutional layer is followed by an activation function layer. Max pooling and stride represent downsampling layers. Therefore, the other submodules in the neural network are an activation function module and a downsampling module.

A ReLU activation function in AlexNet is replaced with a nonlinearity enhancement activation function, and a convolutional/fully connected layer is replaced with a depth re-parameterization convolutional/fully connected layer.

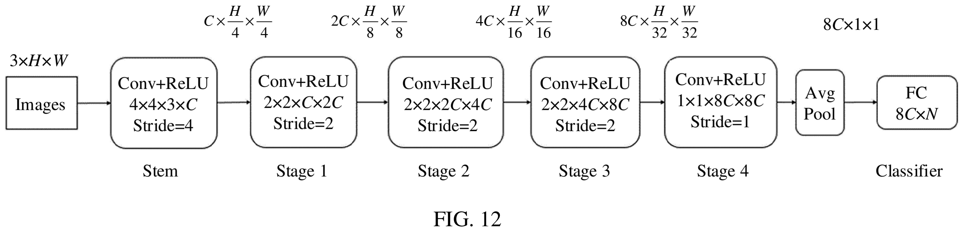

This application may also be applied to another shallow network structure. FIG. 12 is a diagram of a shallow network architecture DeleNet. The shallow network architecture includes only five convolutional layers and one fully connected layer. Kernel sizes and downsampling rates of the convolutional layers are respectively 4, 2, 2, 2, and 1, and quantities of output channels are respectively C, 2C, 4C, 8C, and 8C, where C may be any integer. Each convolutional layer is followed by a ReLu function, and a last convolutional layer is followed by a downsampling layer.

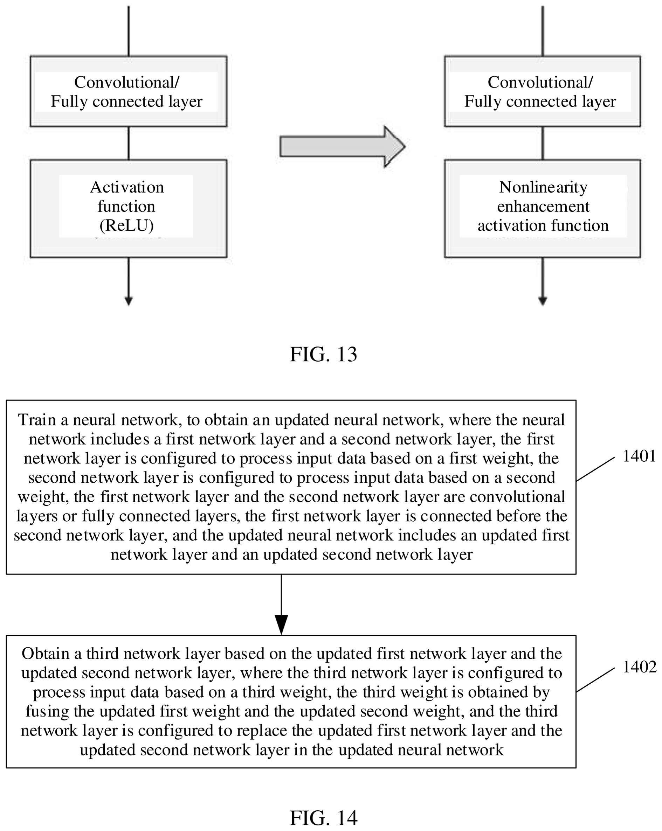

A convolutional+ReLU module or a fully connected+ReLU module in FIG. 11 or FIG. 12 corresponds to a convolutional/fully connected layer+activation function module on the left in FIG. 13. Based on the nonlinearity enhancement activation function provided in this application, any activation function layer (ReLU) in AlexNet may be replaced with the nonlinearity enhancement activation function module. For example, an activation function used by any one or more layers in conv1, conv2, conv3, conv4, and conv5 may be replaced with the activation function, or all activation functions may be replaced.

Specifically, the nonlinearity enhancement activation function may include one or more of existing activation functions such as ReLU, Sigmoid, Tanh, and GeLU. A nonlinearity enhancement activation function form 1 is used as an example, a nonlinearity enhancement activation function may be constructed based on only one activation function ReLU, and a specific form is as follows:

$$y = \hat{A}(x) = \sum_{i=0}^{4} a_i \mathrm{ReLU}(x + b_i).$$

Alternatively, a nonlinearity enhancement activation function may be constructed based on the plurality of activation functions. For example, a nonlinearity enhancement activation function is constructed based on ReLU and Sigmoid, and a specific form is as follows:

$$y = \hat{A}(x) = \sum_{i=0}^{2} a_i \mathrm{ReLU}(x + b_i) + \sum_{i=0}^{2} a_i \mathrm{Sigmoid}(x + b_i).$$

An image classification test experiment is performed on an ImageNet dataset according to the method provided in this embodiment of this application. Table 1 shows a recognition result of a shallow network using the nonlinearity enhancement activation function. It can be seen from the table that, after the nonlinearity enhancement activation function is used (n=1 represents that there is only one activation function, which is equivalent to that no nonlinearity enhancement activation function is used), although a network latency (Latency) is slightly increased, network accuracy is greatly improved. This proves validity of the nonlinearity enhancement activation function provided in embodiments of this application.

Table 1: Effect of the nonlinearity enhancement activation function

| $n$ | FLOPs (B) | Latency (ms) | Top-1 (%) |
|---|---|---|---|
| 1 | 5.85 | 2.56 | 61.67 |
| 2 | 5.88 | 3.03 | 71.00 |
| 3 | 5.93 | 3.23 | 72.05 |
| 4 | 6.00 | 3.41 | 72.20 |

The shallow network DeLeNet is constructed based on the nonlinearity enhancement activation function provided in embodiments of this application, and a speed of the shallow network DeLeNet is compared with that of an existing SOTA deep network solution. It can be seen from Table 2 that the shallow network using the nonlinearity enhancement activation function can achieve effect exceeding that of an existing deep network in a speed-accuracy curve.

Table 2: Effect of the shallow network using the nonlinearity enhancement activation function

| Model | Params (M) | FLOPs (B) | Depth | P100 latency (ms) | 910 latency (ms) | Top-1 (%) | Top-5 (%) |
|---|---|---|---|---|---|---|---|
| ResNet-18 [8] | 11.6 | 1.8 | 18 | 3.80 | 4.5 | 69.76 | 89.08 |
| ResNet-34 [8] | 21.8 | 3.7 | 34 | 7.12 | 7.2 | 73.31 | 91.42 |
| ResNet-50 [8] | 25.6 | 4.1 | 50 | 9.84 | 9.16 | 76.13 | 92.86 |
| Densenet-121 [23] | 8.0 | 2.8 | 121 | 24.87 | - | 74.6 | 92.2 |
| ParNet-S [38] | 17.9 | 4.8 | 12 | 13.28 | - | 75.19 | - |
| MNASNetx0.75 [31] | 3.2 | 0.22 | 53 | 7.01 | - | 71.18 | 90.50 |
| MNASNetxl [31] | 4.4 | 0.33 | 53 | 8.60 | - | 73.456 | 91.51 |
| RegNetX-04GF [32] | 5.2 | 0.4 | 22 | 19.94 | - | 72.83 | - |
| RegNetX-06GF [32] | 6.2 | 0.6 | 18 | 15.00 | - | 74.10 | - |
| RegNetX-08GF [32] | 7.2 | 0.8 | 18 | 18.30 | - | 76.42 | - |
| MobileNetV2 [49] | 3.5 | 0.31 | 52 | 7.66 | - | 71.88 | 90.29 |
| MobileNetV3-Small [50] | 2.5 | 0.05 | 48 | 8.36 | - | 67.67 | 87.40 |
| MobileNetV3-Large [50] | 5.5 | 0.22 | 48 | 10.91 | - | 74.04 | 91.34 |
| ShuffleNetV2x1.5 [49] | 3.5 | 0.3 | 51 | 9.07 | - | 73.00 | 91.09 |
| ShuffleNetV2x2 [50] | 7.4 | 0.6 | 51 | 10.13 | - | 76.23 | 93.01 |
| VGG11-BN [1] | 132.9 | 7.6 | 11 | 2.89 | - | 70.37 | 89.81 |
| VGG13-BN [1] | 133.0 | 11.3 | 13 | 3.79 | - | 71.59 | 90.37 |

(continued)

| Model | Params (M) | FLOPs (B) | Depth | P100 latency (ms) | 910 latency (ms) | Top-1 (%) | Top-5 (%) |
|---|---|---|---|---|---|---|---|
| VGG16-BN [1] | 138.4 | 15.5 | 16 | 4.79 | 11.9 | 73.36 | 91.52 |
| RepVGG-A0 [44] | 8.1 | 1.36 | 23 | 4.91 | - | 72.41 | - |
| RepVGG-AI [44] | 12.8 | 2.37 | 23 | 5.25 | - | 74.46 | - |
| RepVGG-B0 [44] | 1.6 | 3.1 | 29 | 6.37 | - | 75.14 | - |
| DeLeNet-5 | 48.37 | 5.16 | 5 | 2.67 | 5.0 | 70.18 | - |
| DeLeNet-6-Tiny | 17.4 | 1.5 | 6 | 1.7 | 3.5 | 69.83 | |
| DeLeNet-6-Small | 37.6 | 3.4 | 6 | 2.67 | 6.4 | 72.39 | 90.10 |
| DeLeNet-6-Base | 65.4 | 6.0 | 6 | 3.46 | 6.5 | 74.27 | 90.85 |
| DeLeNet-7 | 69.68 | 6.8 | 7 | 4.17 | 6.9 | 76.38 | - |

A main improvement in embodiments of this application different from the conventional technology lies in that, an activation function in an existing neural network is replaced with the nonlinearity enhancement activation function, so that nonlinearity and training effect of the neural network are greatly improved, performance of the network can be the same as that of the deep network, and the speed is faster, especially performance of the shallow neural network is improved more significantly.

FIG. 14 is a schematic flowchart of a data processing method according to an embodiment of this application. The method includes the following steps.

1401: Train a neural network, to obtain an updated neural network, where the neural network includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer.

1402: Obtain a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

In a possible implementation, the neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer; and the third network layer may be obtained based on the updated first network layer, the updated second network layer, and the updated fourth network layer, where the third weight is obtained by fusing the updated first weight, the updated second weight, and the updated fourth weight.

An embodiment of this application provides a depth re-parameterization training method. The method may be applied to any fully connected layer or convolutional layer in a neural network, and can improve network accuracy without affecting an inference speed.

Specifically, calculation of an existing convolutional layer/fully connected layer may be written as $y = Wx$, where x is an input of the convolutional layer, y is an output of the convolutional layer, and W is a weight matrix.

To increase a depth of the network during training, in this embodiment of this application, one or more convolutional/fully connected layers are added before and/or after the layer. Therefore, original calculation may be changed into $y = W_{-n}W_{-(n-1)} ... W_{-1}WW_1 ... W_m x$. Herein, $W_{-n}W_{-(n-1)} ... W_{-1}$ and $W_1 ... W_m$ represent calculation of n and m convolutional/fully connected layers added before and after the layer. When the network includes a plurality of convolutional layers and/or fully connected layers, only some layers may be processed according to the foregoing method, to increase the depth of the network during training.

A network whose network structure is modified according to this method is trained, to obtain a trained network.

During inference, for a layer whose network depth is increased during training, a weight of an original convolutional layer/fully connected layer may be fused with a weight of the one or more convolutional/fully connected layers added before and/or after the layer. A weight matrix corresponding to the layer after fusion is denoted as $W' = W_{-n}W_{-(n-1)} ... W_{-1}WW_1 ... W_m$. In this case, calculation of the convolutional/fully connected layers with depth re-parameterization can be written as $y = W'x$.

During training, a plurality of layers may be used for training, to increase depths of the layers. Because there is no nonlinear function between these layers, and all the layers are linear layers, these layers may be fused during inference. This can improve training accuracy without increasing the inference speed.

It should be understood that the nonlinearity enhancement activation function aims to improve nonlinearity of the network, so that good nonlinearity can be obtained when there are a small quantity of network layers. The depth re-parameterization training solution aims to improve network accuracy without affecting the inference speed. The depth re-parameterization training solution and the nonlinearity enhancement activation function may be used together, or may be used separately. For a shallow network, a combination of the depth re-parameterization training solution and the nonlinearity enhancement activation function can achieve optimal effect.

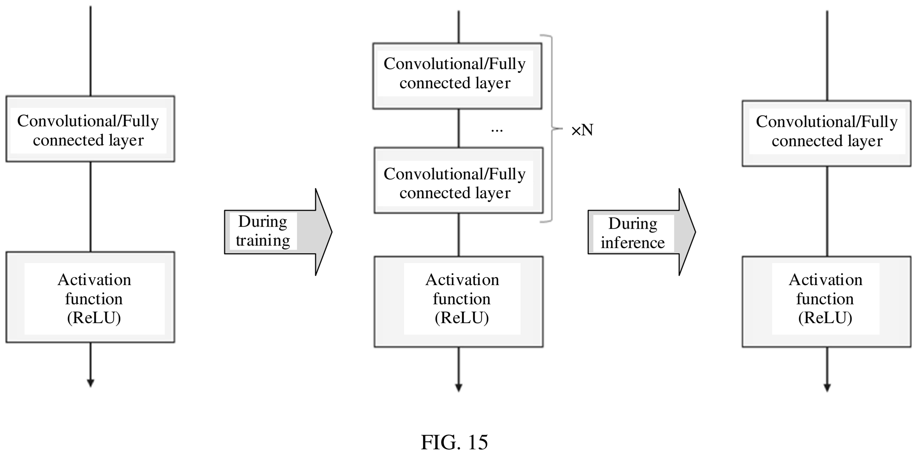

FIG. 15 shows how to use a depth re-parameterization module provided in the present invention. After the depth re-parameterization module provided in this embodiment of this application is used, during training, a plurality of convolutional/fully connected layers may be introduced for calculation, but no activation function is added between these layers. During inference, these layers may be fused.

It should be noted that the nonlinearity enhancement activation function and the depth re-parameterization module provided in this embodiment of this application may be used separately, or may be used together.

The depth parameterization module is applicable to any neural network structure that uses convolutional and fully connected layers. The neural network structure includes various typical network structures such as a CNN, an RNN, an MLP, and a transformer, and is applicable to various tasks such as an image, a speech, and text. Particularly, when this embodiment of this application is applied to a shallow neural network, accuracy of the shallow neural network can be greatly improved.

An image classification test experiment is performed on an ImageNet dataset according to a depth re-parameterization training solution algorithm provided in this embodiment of this application. Table 3 shows a recognition result using the depth re-parameterization training solution. It can be seen from Table 3 that, after the depth re-parameterization training solution is used, network accuracy is greatly improved. In addition, no inference parameter is added. This proves validity of the depth re-parameterization training solution provided in this embodiment of this application in the shallow network.

Table 3: Result of depth re-parameterization

| Type of re-parameterization | Top-1 (%) |
|---|---|
| $k \times k$ | 72.20 |
| $l \times l \rightarrow k \times k$ | 74.27 |
| $k \times k \rightarrow 1 \times 1$ | 73.62 |
| $k \times k \rightarrow 1 \times 1 \rightarrow 1 \times 1$ | 70.86 |
| $l \times l \rightarrow 1 \times 1 \rightarrow k \times k$ | 70.70 |
| $l \times l \rightarrow k \times k \rightarrow 1 \times l$ | 72.18 |

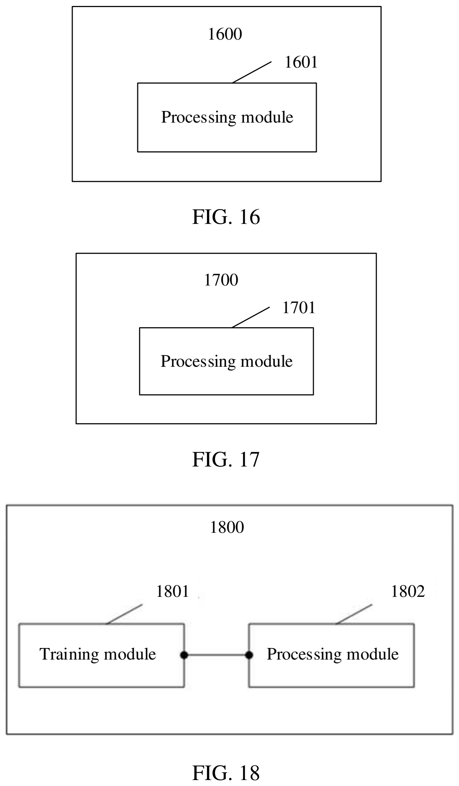

FIG. 16 is a diagram of a structure of a data processing apparatus 1600 according to an embodiment of this application. As shown in FIG. 16, the data processing apparatus 1600 provided in this embodiment of this application is used in an activation unit in a neural network. The activation unit includes a plurality of processing branches, and each processing branch corresponds to one activation function. The apparatus 1600 includes:

a processing module 1601, configured to: perform activation processing on input data via each processing branch in the plurality of processing branches based on the corresponding activation function, to obtain a plurality of processing results; and fuse the plurality of processing results, to obtain a target processing result.

For specific descriptions of the processing module 1601, refer to the descriptions of step 901 and step 902 in the foregoing embodiment. Details are not described herein again.

In a possible implementation, at least two processing branches in the plurality of processing branches correspond to different activation functions.

In a possible implementation, at least one processing branch in the plurality of processing branches corresponds to a target parameter.

The processing module is specifically configured to:

perform activation processing on a calculation result of the input data and the target parameter via each processing branch in the at least one processing branch based on the corresponding activation function, to obtain a processing result of the at least one processing branch.

In a possible implementation, the target parameter includes a first parameter, and the calculation result is a sum result of the input data and the first parameter.

In a possible implementation, at least two processing branches in the plurality of processing branches correspond to different first parameters; or a first parameter corresponding to at least one processing branch in the plurality of processing branches is updated during model training.

In a possible implementation, the target parameter includes a third parameter, and the calculation result includes a product result of the input data and the third parameter; or

the calculation result includes the first parameter and the third parameter, and the calculation result includes a sum result of the product result and the first parameter.

In a possible implementation, at least two processing branches in the plurality of processing branches correspond to different third parameters; or

a third parameter corresponding to at least one processing branch in the plurality of processing branches is updated during model training.

In a possible implementation, at least one processing branch in the plurality of processing branches corresponds to a second parameter.

The processing module is specifically configured to:

perform weighted summation on the plurality of processing results based on a second parameter that corresponds to each processing branch in the at least one processing branch and that is used as a weight, to obtain the target processing result.

In a possible implementation, at least two processing branches in the plurality of processing branches correspond to different second parameters; or

a second parameter corresponding to at least one processing branch in the plurality of processing branches is updated during model training.

In a possible implementation, the activation function is a RELU function, and each processing branch in the plurality of processing branches corresponds to a first parameter and a second parameter.

The processing module is specifically configured to:

perform activation processing on the sum result of the input data and the first parameter via each processing branch in the plurality of processing branches based on the corresponding activation function, to obtain a plurality of processing results; and

fusing the plurality of processing results, to obtain the target processing result includes:

performing weighted summation on the plurality of processing results based on the second parameter that corresponds to each processing branch in the plurality of processing branches and that is used as a weight, to obtain the target processing result.

In a possible implementation, the processing module is further configured to:

train the neural network, to obtain an updated neural network, where the neural network further includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer; and

obtain a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

The neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer.

The processing module is specifically configured to:

obtain the third network layer based on the updated first network layer, the updated second network layer, and the updated fourth network layer, where the third weight is obtained by fusing the updated first weight, the updated second weight, and the updated fourth weight.

FIG. 17 is a diagram of a structure of a data processing apparatus 1700 according to an embodiment of this application. The data processing apparatus is used in an activation unit in a neural network. The activation unit includes a plurality of processing branches, and each processing branch corresponds to one activation function. The apparatus 1700 includes:

a processing module 1701, configured to: determine a target processing branch from the plurality of processing branches based on input data of the activation unit; and

perform activation processing on the input data via the target processing branch based on a corresponding activation function, to obtain a target processing result.

For specific descriptions of the processing module 1701, refer to the descriptions of step 1001 in the foregoing embodiment. Details are not described herein again.

In a possible implementation, different processing branches in the plurality of processing branches correspond to different value ranges; and determining the target processing branch from the plurality of processing branches based on the input data of the activation unit includes: determining, from the plurality of processing branches based on the input data of the activation unit, a processing branch whose corresponding value range includes the input data as the target processing branch.

In a possible implementation, at least two processing branches in the plurality of processing branches correspond to different activation functions.

In a possible implementation, at least one processing branch in the plurality of processing branches corresponds to a target parameter. The processing module is specifically configured to:
perform activation processing on a calculation result of the input data and the target parameter via the target processing branch based on the corresponding activation function.

In a possible implementation, the target parameter includes a first parameter, and the calculation result is a sum result of the input data and the first parameter.

In a possible implementation, at least two processing branches in the plurality of processing branches correspond to different first parameters; or a first parameter corresponding to at least one processing branch in the plurality of processing branches is updated during model training.

In a possible implementation, the target parameter includes a third parameter, and the calculation result includes a product result of the input data and the third parameter; or the calculation result includes the first parameter and the third parameter, and the calculation result includes a sum result of the product result and the first parameter.

In a possible implementation, at least two processing branches in the plurality of processing branches correspond to different third parameters; or a third parameter corresponding to at least one processing branch in the plurality of processing branches is updated during model training.

In a possible implementation, at least one processing branch in the plurality of processing branches corresponds to a second parameter. The processing module is specifically configured to:
perform activation processing on the input data via the target processing branch based on the corresponding activation function, to obtain a processing result of activation processing; and fuse the processing result and a second parameter that corresponds to the target processing branch and that is used as a weight, to obtain the target processing result.

In a possible implementation, at least two processing branches in the plurality of processing branches correspond to different second parameters; or a second parameter corresponding to at least one processing branch in the plurality of processing branches is updated during model training.

In a possible implementation, at least one processing branch in the plurality of processing branches includes a plurality of processing subbranches, and each processing subbranch corresponds to one activation function. When the target processing branch includes a plurality of processing subbranches, the processing module is specifically configured to:
process the input data via each processing branch in the plurality of processing subbranches included in the target processing branch, to obtain a plurality of processing results; and fuse the plurality of processing results, to obtain the target processing result.

In a possible implementation, at least two processing subbranches in the plurality of processing subbranches correspond to different activation functions.

In a possible implementation, at least one processing subbranch in the plurality of processing subbranches corresponds to a target parameter.

The processing module is specifically configured to:
perform activation processing on the calculation result of the input data and the target parameter via a target processing subbranch based on a corresponding activation function.

In a possible implementation, the target parameter includes a fourth parameter, and the calculation result is a sum result of the input data and the fourth parameter.

In a possible implementation, at least two processing subbranches in the plurality of processing subbranches correspond to different fourth parameters; or
a fourth parameter corresponding to at least one processing subbranch in the plurality of processing subbranches is updated during model training.

In a possible implementation, the target parameter includes a sixth parameter, and the calculation result includes a product result of the input data and the sixth parameter; or
the calculation result includes the fourth parameter and the sixth parameter, and the calculation result includes a sum result of the product result and the fourth parameter.

In a possible implementation, at least two processing subbranches in the plurality of processing subbranches correspond to different sixth parameters; or

a sixth parameter corresponding to at least one processing subbranch in the plurality of processing subbranches is updated during model training.

In a possible implementation, at least one processing subbranch in the plurality of processing subbranches corresponds to a fifth parameter.

The processing module is specifically configured to:

perform activation processing on the input data via the target processing subbranch based on the corresponding activation function, to obtain a processing result of activation processing; and
fuse the processing result and a fifth parameter that corresponds to the target processing subbranch and that is used as a weight, to obtain the target processing result.

In a possible implementation, at least two processing subbranches in the plurality of processing subbranches correspond to different fifth parameters; or a fifth parameter corresponding to at least one processing subbranch in the plurality of processing subbranches is updated during model training.

In a possible implementation, at least two processing branches in the plurality of processing branches include a plurality of processing subbranches, and quantities of processing subbranches included in a plurality of processing branches in the at least two processing branches are different.

In a possible implementation, the processing module is further configured to:

train the neural network, to obtain an updated neural network, where the neural network further includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer; and
obtain a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

In a possible implementation, the neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer.

The processing module is specifically configured to:

obtain the third network layer based on the updated first network layer, the updated second network layer, and the updated fourth network layer, where the third weight is obtained by fusing the updated first weight, the updated second weight, and the updated fourth weight.

FIG. 18 is a diagram of a structure of a data processing apparatus 1800 according to an embodiment of this application. The apparatus 1800 includes a training module 1801 and a processing module 1802.

The training module 1801 is configured to train a neural network, to obtain an updated neural network, where the neural network includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer.

For specific descriptions of the training module 1801, refer to the descriptions of step 1401 in the foregoing embodiment. Details are not described herein again.

The processing module 1802 is configured to obtain a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network.

For specific descriptions of the processing module 1802, refer to the descriptions of step 1402 in the foregoing embodiment. Details are not described herein again.

In a possible implementation, the neural network further includes a fourth network layer, the fourth network layer is configured to process input data based on a fourth weight, the fourth network layer is a convolutional layer or a fully connected layer, the fourth network layer is connected after the second network layer, and the updated neural network includes an updated fourth network layer.

The processing module is specifically configured to:
obtain the third network layer based on the updated first network layer, the updated second network layer, and the updated fourth network layer, where the third weight is obtained by fusing the updated first weight, the updated second weight, and the updated fourth weight.

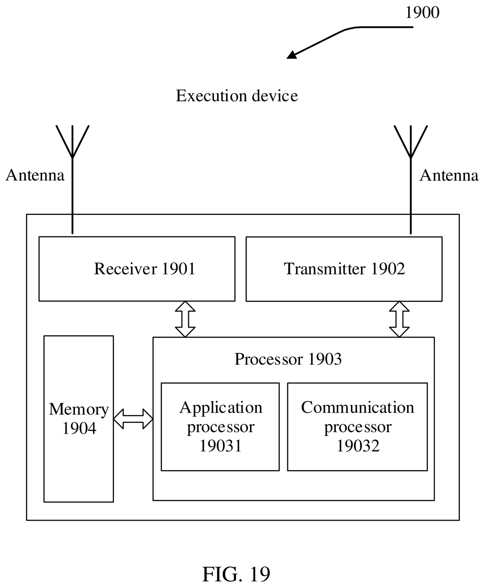

The following describes an execution device provided in an embodiment of this application. FIG. 19 is a diagram of a structure of an execution device according to an embodiment of this application. The execution device 1900 may be specifically represented as a virtual reality VR device, a mobile phone, a tablet computer, a notebook computer, a smart wearable device, a monitor device, a server, or the like. This is not limited herein. Specifically, the execution device 1900 includes a receiver 1901, a transmitter 1902, a processor 1903, and a memory 1904 (there may be one or more processors 1903 in the execution device 1900, and one processor is used as an example in FIG. 19). The processor 1903 may include an application processor 19031 and a communication processor 19032. In some embodiments of this application, the receiver 1901, the transmitter 1902, the processor 1903, and the memory 1904 may be connected through a bus or in another manner.

The memory 1904 may include a read-only memory and a random access memory, and provide instructions and data for the processor 1903. A part of the memory 1904 may further include a non-volatile random access memory (non-volatile random access memory, NVRAM). The memory 1904 stores a processor and operation instructions, an executable module or a data structure, or a subset thereof or an extended set thereof. The operation instructions may include various operation instructions for implementing various operations.

The processor 1903 controls an operation of the execution device. In a specific application, components of the execution device are coupled together through a bus system. In addition to a data bus, the bus system may further include a power bus, a control bus, a status signal bus, and the like. However, for clarity of description, various buses are referred to as the bus system in the figure.

The method disclosed in the foregoing embodiments of this application may be applied to the processor 1903, or may be implemented by the processor 1903. The processor 1903 may be an integrated circuit chip, and has a signal processing capability. In an implementation process, steps in the foregoing method may be implemented through a hardware integrated logic circuit in the processor 1903, or by using instructions in a form of software. The processor 1903 may be a general-purpose processor, a digital signal processor (digital signal processor, DSP), a microprocessor or a microcontroller, and may further include an application-specific integrated circuit (application specific integrated circuit, ASIC), a field-programmable gate array (field-programmable gate array, FPGA) or another programmable logic device, a discrete gate or transistor logic device, or a discrete hardware component. The processor 1903 may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1904. The processor 1903 reads information in the memory 1904, and completes the steps in the foregoing method in combination with hardware of the processor.

The receiver 1901 may be configured to receive input digit or character information, and generate signal input related to a related setting and function control of the execution device. The transmitter 1902 may be configured to output digit or character information through a first interface. The transmitter 1902 may be further configured to send an instruction to a disk group through the first interface, to modify data in the disk group. The transmitter 1902 may further include a display device such as a display.

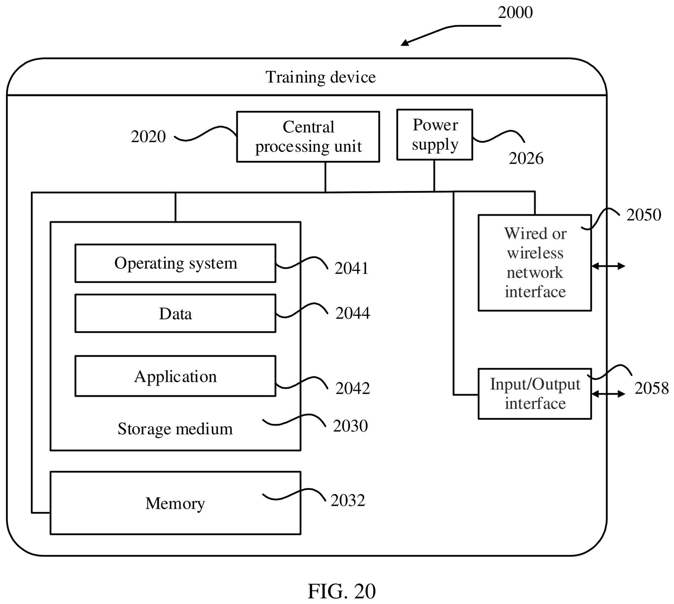

An embodiment of this application further provides a training device. FIG. 20 is a diagram of a structure of a training device according to an embodiment of this application. Specifically, the training device 2000 is implemented by one or more servers. The training device 2000 may differ greatly due to different configurations or performance, and may include one or more central processing units (central processing units, CPUs) 2020 (for example, one or more processors), a memory 2032, and one or more storage media 2030 (for example, one or more massive storage devices) that store an application 2042 or data 2044. The memory 2032 and the storage medium 2030 each may be a transient storage or a persistent storage. A program stored in the storage medium 2030 may include one or more modules (not shown in the figure), and each module may include a series of instruction operations for the training device. Further, the central processing unit 2020 may be configured to communicate with the storage medium 2030, and perform, on the training device 2000, a series of instruction operations in the storage medium 2030.

The training device 2000 may further include one or more power supplies 2026, one or more wired or wireless network interfaces 2050, one or more input/output interfaces 2058, or one or more operating systems 2041, for example, Windows ServerTM, Mac OS XTM, UnixTM, LinuxTM and FreeBSDTM.

In this embodiment of this application, the central processing unit 2020 is configured to perform an action related to model training in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program is run on a computer, the computer is enabled to perform steps performed by the foregoing execution device, or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache. Alternatively, the storage unit may be a storage unit, such as a read-only memory (read-only memory, ROM), another type of static storage device that can store static information and instructions, or a random access memory (random access memory, RAM), in a wireless access device but outside the chip.

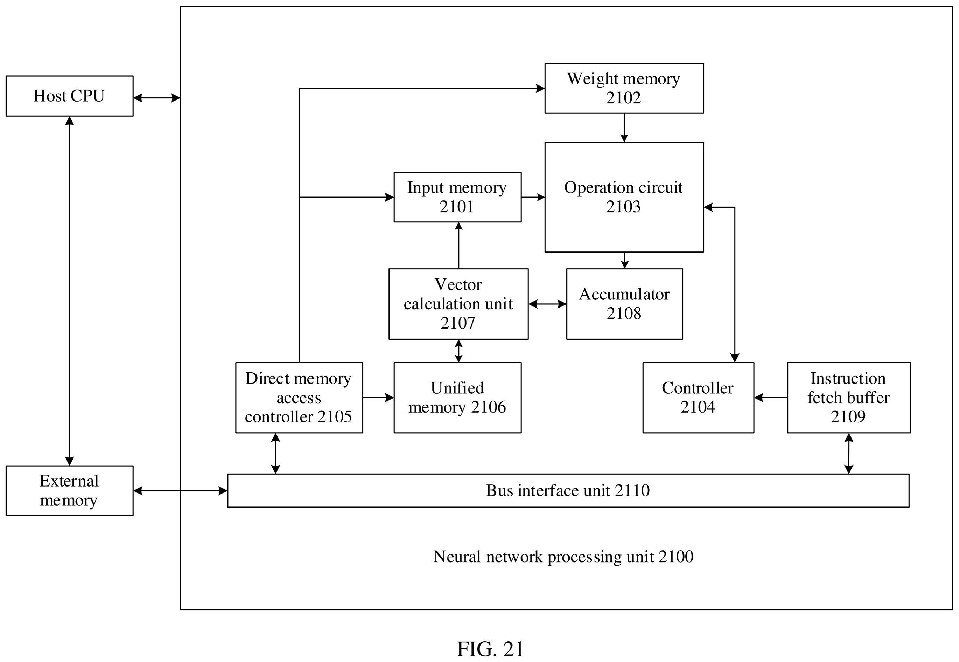

Specifically, FIG. 21 is a diagram of a structure of a chip according to an embodiment of this application. The chip may be represented as a neural network processing unit NPU 2100. The NPU 2100 is mounted to a host CPU (Host CPU) as a coprocessor, and the host CPU allocates a task. A core part of the NPU is an operation circuit 2103, and a controller 2104 controls the operation circuit 2103 to extract matrix data in a memory and perform a multiplication operation.

In some implementations, the operation circuit 2103 internally includes a plurality of processing units (Process Engine, PE). In some implementations, the operation circuit 2103 is a two-dimensional systolic array. The operation circuit 2103 may alternatively be a one-dimensional systolic array or another electronic circuit capable of performing mathematical operations such as multiplication and addition. In some implementations, the operation circuit 2103 is a general-purpose matrix processor.

For example, it is assumed that there is an input matrix A, a weight matrix B, and an output matrix C. The operation circuit fetches, from a weight memory 2102, data corresponding to the matrix B, and buffers the data on each PE in the operation circuit. The operation circuit fetches data of the matrix A from an input memory 2101 to perform a matrix operation on the matrix B, and stores an obtained partial result or an obtained final result of the matrix into an accumulator (accumulator) 2108.

A unified memory 2106 is configured to store input data and output data. Weight data is directly transferred to the weight memory 2102 through a direct memory access controller (Direct Memory Access Controller, DMAC) 2105. The input data is also transferred to the unified memory 2106 through the DMAC.

A BIU is a bus interface unit, namely, a bus interface unit 2110, and is configured to perform interaction between an AXI bus and the DMAC and between the AXI bus and an instruction fetch buffer (Instruction Fetch Buffer, IFB) 2109.

The bus interface unit 2110 (Bus Interface Unit, BIU for short) is configured to obtain an instruction from an external memory by the instruction fetch buffer 2109, and is further configured to obtain original data of the input matrix A or the weight matrix B from the external memory by the direct memory access controller 2105.

The DMAC is mainly configured to transfer input data in the external memory DDR to the unified memory 2106, transfer weight data to the weight memory 2102, or transfer input data to the input memory 2101.

A vector calculation unit 2107 includes a plurality of operation processing units. If necessary, further processing, for example, vector multiplication, vector addition, exponential operation, logarithmic operation, and value comparison is performed on an output of the operation circuit 2103. The vector calculation unit 2107 is mainly configured to perform network calculation, such as batch normalization (batch normalization), pixel-level summation, and upsampling of a feature map, at a non-convolutional/fully connected layer in a neural network.

In some implementations, the vector calculation unit 2107 can store a processed output vector in the unified memory 2106. For example, the vector calculation unit 2107 may apply a linear function or a nonlinear function to the output of the operation circuit 2103, for example, perform linear interpolation on a feature map extracted by the convolutional layer, for another example, add value vectors, to generate an activation value. In some implementations, the vector calculation unit 2107 generates a normalized value, a pixel-level summation value, or both a normalized value and a pixel-level summation value. In some implementations, the processed output vector can be used as an activation input to the operation circuit 2103, for example, used in a subsequent layer in the neural network.

The instruction fetch buffer (instruction fetch buffer) 2109 connected to the controller 2104 is configured to store instructions used by the controller 2104.

The unified memory 2106, the input memory 2101, the weight memory 2102, and the instruction fetch buffer 2109 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by software, hardware, firmware, or any combination thereof. When the software is used to implement embodiments, all or some of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

**Claims**

1. A data processing method, applied to an activation unit in a neural network, wherein the activation unit comprises a plurality of processing branches, each processing branch corresponds to one activation function, and the method comprises:

   performing activation processing on input data via each processing branch in the plurality of processing branches based on the corresponding activation function, to obtain a plurality of processing results; and
   fusing the plurality of processing results, to obtain a target processing result.

2. The method according to claim 1, wherein at least two processing branches in the plurality of processing branches correspond to different activation functions.

3. The method according to claim 1 or 2, wherein at least one processing branch in the plurality of processing branches corresponds to a target parameter; and
   performing activation processing on input data via each processing branch in the plurality of processing branches based on the corresponding activation function, to obtain the plurality of processing results comprises:

performing activation processing on a calculation result of the input data and the target parameter via each processing branch in the at least one processing branch based on the corresponding activation function, to obtain a processing result of the at least one processing branch.

4. The method according to claim 3, wherein the target parameter comprises a first parameter, and the calculation result is a sum result of the input data and the first parameter.

5. The method according to claim 4, wherein at least two processing branches in the plurality of processing branches correspond to different first parameters; or
a first parameter corresponding to at least one processing branch in the plurality of processing branches is updated during model training.

6. The method according to any one of claims 3 to 5, wherein the target parameter comprises a third parameter, and the calculation result comprises a product result of the input data and the third parameter; or
the calculation result comprises the first parameter and the third parameter, and the calculation result comprises a sum result of the product result and the first parameter.

7. The method according to claim 6, wherein at least two processing branches in the plurality of processing branches correspond to different third parameters; or
a third parameter corresponding to at least one processing branch in the plurality of processing branches is updated during model training.

8. The method according to any one of claims 1 to 7, wherein at least one processing branch in the plurality of processing branches corresponds to a second parameter; and
fusing the plurality of processing results, to obtain the target processing result comprises:
performing weighted summation on the plurality of processing results based on a second parameter that corresponds to each processing branch in the at least one processing branch and that is used as a weight, to obtain the target processing result.

9. The method according to claim 8, wherein at least two processing branches in the plurality of processing branches correspond to different second parameters; or
a second parameter corresponding to at least one processing branch in the plurality of processing branches is updated during model training.

10. The method according to any one of claims 1 to 9, wherein the activation function is a RELU function, and each processing branch in the plurality of processing branches corresponds to a first parameter and a second parameter;
performing activation processing on input data via each processing branch in the plurality of processing branches based on the corresponding activation function, to obtain the plurality of processing results comprises:

   performing activation processing on the sum result of the input data and the first parameter via each processing branch in the plurality of processing branches based on the corresponding activation function, to obtain a plurality of processing results; and
   fusing the plurality of processing results, to obtain the target processing result comprises:
   performing weighted summation on the plurality of processing results based on the second parameter that corresponds to each processing branch in the plurality of processing branches and that is used as a weight, to obtain the target processing result.

11. The method according to any one of claims 1 to 9, wherein the method further comprises:

   training the neural network, to obtain an updated neural network, wherein the neural network further comprises a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network comprises an updated first network layer and an updated second network layer; and
   obtaining a third network layer based on the updated first network layer and the updated second network layer, wherein the third network layer is configured to process the input data based on a third weight, the third weight is obtained by fusing the updated first weight and the updated second weight, and the third network layer is configured to replace the updated first network layer and the updated second network layer in the updated neural network.

12. A data processing method, applied to an activation unit in a neural network, wherein the activation unit comprises a plurality of processing branches, each processing branch corresponds to one activation function, and the method comprises:

   determining a target processing branch from the plurality of processing branches based on input data of the activation unit; and

   performing activation processing on the input data via the target processing branch based on a corresponding activation function, to obtain a target processing result.

13. The method according to claim 12, wherein different processing branches in the plurality of processing branches correspond to different value ranges; and

   determining the target processing branch from the plurality of processing branches based on the input data of the activation unit comprises:

   determining, from the plurality of processing branches based on the input data of the activation unit, a processing branch whose corresponding value range comprises the input data as the target processing branch.

14. The method according to claim 12 or 13, wherein at least two processing branches in the plurality of processing branches correspond to different activation functions.

15. The method according to any one of claims 12 to 14, wherein at least one processing branch in the plurality of processing branches corresponds to a target parameter; and

   performing activation processing on the input data via the target processing branch based on the corresponding activation function comprises:

   performing activation processing on a calculation result of the input data and the target parameter via the target processing branch based on the corresponding activation function.

16. The method according to claim 15, wherein the target parameter comprises a first parameter, and the calculation result is a sum result of the input data and the first parameter.

17. The method according to claim 16, wherein at least two processing branches in the plurality of processing branches correspond to different first parameters; or

   a first parameter corresponding to at least one processing branch in the plurality of processing branches is updated during model training.

18. The method according to any one of claims 12 to 17, wherein the target parameter comprises a third parameter, and the calculation result comprises a product result of the input data and the third parameter; or

   the calculation result comprises the first parameter and the third parameter, and the calculation result comprises a sum result of the product result and the first parameter.

19. The method according to claim 18, wherein at least two processing branches in the plurality of processing branches correspond to different third parameters; or

   a third parameter corresponding to at least one processing branch in the plurality of processing branches is updated during model training.

20. The method according to any one of claims 12 to 19, wherein at least one processing branch in the plurality of processing branches corresponds to a second parameter; and

   performing activation processing on the input data via the target processing branch based on the corresponding activation function, to obtain the target processing result comprises:

   performing activation processing on the input data via the target processing branch based on the corresponding activation function, to obtain a processing result of activation processing; and

   fusing the processing result and a second parameter that corresponds to the target processing branch and that is used as a weight, to obtain the target processing result.

21. The method according to claim 20, wherein at least two processing branches in the plurality of processing branches correspond to different second parameters; or

a second parameter corresponding to at least one processing branch in the plurality of processing branches is updated during model training.

22. The method according to any one of claims 12 to 21, wherein at least one processing branch in the plurality of processing branches comprises a plurality of processing subbranches, and each processing subbranch corresponds to one activation function; and

when the target processing branch comprises a plurality of processing subbranches, performing activation processing on the input data via the target processing branch based on the corresponding activation function comprises:

processing the input data via each processing branch in the plurality of processing subbranches comprised in the target processing branch, to obtain a plurality of processing results; and

fusing the plurality of processing results, to obtain the target processing result.

23. The method according to any one of claims 12 to 22, wherein the method further comprises:

training the neural network, to obtain an updated neural network, wherein the neural network further comprises a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network comprises an updated first network layer and an updated second network layer; and

obtaining a third network layer based on the updated first network layer and the updated second network layer, wherein the third network layer is configured to process input data based on a third weight, the third weight is obtained by fusing the updated first weight and the updated second weight, and the third network layer is configured to replace the updated first network layer and the updated second network layer in the updated neural network.

24. A data processing method, wherein the method comprises:

training a neural network, to obtain an updated neural network, wherein the neural network comprises a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network comprises an updated first network layer and an updated second network layer; and

obtaining a third network layer based on the updated first network layer and the updated second network layer, wherein the third network layer is configured to process input data based on a third weight, the third weight is obtained by fusing the updated first weight and the updated second weight, and the third network layer is configured to replace the updated first network layer and the updated second network layer in the updated neural network.

25. The method according to claim 24, wherein the neural network further comprises a fourth network layer, the fourth network layer is configured to process input data based on a fourth weight, the fourth network layer is a convolutional layer or a fully connected layer, the fourth network layer is connected after the second network layer, and the updated neural network comprises an updated fourth network layer; and

obtaining the third network layer based on the updated first network layer and the updated second network layer comprises:

obtaining the third network layer based on the updated first network layer, the updated second network layer, and the updated fourth network layer, wherein the third weight is obtained by fusing the updated first weight, the updated second weight, and the updated fourth weight.

26. A data processing apparatus, used in an activation unit in a neural network, wherein the activation unit comprises a plurality of processing branches, each processing branch corresponds to one activation function, and the apparatus comprises:

a processing module, configured to: perform activation processing on input data via each processing branch in the plurality of processing branches based on the corresponding activation function, to obtain a plurality of processing results; and

fuse the plurality of processing results, to obtain a target processing result.

27. The apparatus according to claim 26, wherein at least two processing branches in the plurality of processing branches correspond to different activation functions.

28. The apparatus according to claim 26 or 27, wherein at least one processing branch in the plurality of processing branches corresponds to a target parameter; and

the processing module is specifically configured to:

perform activation processing on a calculation result of the input data and the target parameter via each processing branch in the at least one processing branch based on the corresponding activation function, to obtain a processing result of the at least one processing branch.

29. The apparatus according to claim 28, wherein the target parameter comprises a first parameter, and the calculation result is a sum result of the input data and the first parameter.

30. The apparatus according to claim 29, wherein at least two processing branches in the plurality of processing branches correspond to different first parameters; or

a first parameter corresponding to at least one processing branch in the plurality of processing branches is updated during model training.

31. The apparatus according to any one of claims 28 to 30, wherein the target parameter comprises a third parameter, and the calculation result comprises a product result of the input data and the third parameter; or

the calculation result comprises the first parameter and the third parameter, and the calculation result comprises a sum result of the product result and the first parameter.

32. The apparatus according to claim 31, wherein at least two processing branches in the plurality of processing branches correspond to different third parameters; or

a third parameter corresponding to at least one processing branch in the plurality of processing branches is updated during model training.

33. The apparatus according to any one of claims 26 to 32, wherein at least one processing branch in the plurality of processing branches corresponds to a second parameter; and

the processing module is specifically configured to:

perform weighted summation on the plurality of processing results based on a second parameter that corresponds to each processing branch in the at least one processing branch and that is used as a weight, to obtain the target processing result.

34. A data processing apparatus, used in an activation unit in a neural network, wherein the activation unit comprises a plurality of processing branches, each processing branch corresponds to one activation function, and the apparatus comprises:

a processing module, configured to: determine a target processing branch from the plurality of processing branches based on input data of the activation unit; and

perform activation processing on the input data via the target processing branch based on a corresponding activation function, to obtain a target processing result.

35. The apparatus according to claim 34, wherein different processing branches in the plurality of processing branches correspond to different value ranges; and

the processing module is specifically configured to:

determine, from the plurality of processing branches based on the input data of the activation unit, a processing branch whose corresponding value range comprises the input data as the target processing branch.

36. A computer storage medium, wherein the computer storage medium stores one or more instructions, and when the instructions are executed by one or more computers, the one or more computers are enabled to perform an operation in the method according to any one of claims 1 to 25.

37. A computer program product, comprising computer-readable instructions, wherein when the computer-readable instructions are run on a computer device, the computer device is enabled to perform the method according to any one of claims 1 to 25.

38. A computing device, comprising at least one processor and at least one memory, wherein the processor and the memory are connected to each other through a communication bus and complete mutual communication;

the at least one memory is configured to store code; and
the at least one processor is configured to execute the code, to perform the method according to any one of claims 1 to 25.

Intelligent information chain

| Smart product and industry application |

| Translation/ Text analysis/... | Speech/Vision/Image/ ... |

| Data | Data processing: | Data training/Machine learning/ Deep learning | Searching/ Inference/ Decision-making | ... |

| Infrastructure | Sensor | Smart chip | Basic platform | ... |

IT value chain

FIG. 1

FIG. 2a

FIG. 2b

FIG. 3

FIG. 4

FIG. 5

FIG. 6

**Image processing result**

Neural network layer 130

Output layer 140

Hidden layer n (13n)

Hidden layer 2 (132)

Hidden layer 1 (131)

Convolutional layer/Pooling layer 120

| 126 | 126 | 126 |
| 125 | 125 | 125 |
| 124 | 124 | 124 |
| 123 | 123 | 123 |
| 122 | 122 | 122 |
| 121 | 121 | 121 |

Convolutional neural network (CNN) 100

Input layer 110

Input layer 110

To-be-processed image

FIG. 7

FIG. 8

EP 4 647 968 A1

Perform activation processing on input data via each processing branch in a plurality of processing branches based on a corresponding activation function, to obtain a plurality of processing results — 901

Fuse the plurality of processing results, to obtain a target processing result — 902

FIG. 9

Determine a target processing branch from a plurality of processing branches based on input data of an activation unit, and process the input data via the target processing branch, to obtain a target processing result — 1001

FIG. 10

conv1
conv2
conv3
conv4
conv5
fc6  fc7  fc8
1×1×4096    1×1×1000
7×7×512
14×14×512
28×28×512
56×56×256
112×112×128
224×224×64

convolutional+ReLU
max pooling
fully connected+ReLU
softmax

FIG. 11

FIG. 12

```
┌─────────────────────────┐         ┌─────────────────────────┐
│   Convolutional/        │         │   Convolutional/        │
│   Fully connected layer │         │   Fully connected layer │
└─────────────────────────┘   ⟹    └─────────────────────────┘
┌─────────────────────────┐         ┌─────────────────────────┐
│   Activation            │         │   Nonlinearity          │
│   function              │         │   enhancement           │
│   (ReLU)                │         │   activation function   │
└─────────────────────────┘         └─────────────────────────┘
```

FIG. 13

Train a neural network, to obtain an updated neural network, where the neural network includes a first network layer and a second network layer, the first network layer is configured to process input data based on a first weight, the second network layer is configured to process input data based on a second weight, the first network layer and the second network layer are convolutional layers or fully connected layers, the first network layer is connected before the second network layer, and the updated neural network includes an updated first network layer and an updated second network layer ⟋ 1401

Obtain a third network layer based on the updated first network layer and the updated second network layer, where the third network layer is configured to process input data based on a third weight, the third weight is obtained by fusing the updated first weight and the updated second weight, and the third network layer is configured to replace the updated first network layer and the updated second network layer in the updated neural network ⟋ 1402

FIG. 14

FIG. 15

1600

1601

Processing module

FIG. 16

1700

1701

Processing module

FIG. 17

1800

1801

1802

Training module

Processing module

FIG. 18

1900

Execution device

FIG. 19

2000

Training device

2020

Central processing unit

Power supply

2026

2050

Wired or wireless network interface

Operating system 2041

Data 2044

Application 2042

Storage medium 2030

Input/Output interface 2058

Memory 2032

FIG. 20

| Host CPU |
| --- |

| Weight memory 2102 |
| --- |

| Input memory 2101 |
| --- |

| Operation circuit 2103 |
| --- |

| Vector calculation unit 2107 |
| --- |

| Accumulator 2108 |
| --- |

| Direct memory access controller 2105 |
| --- |

| Unified memory 2106 |
| --- |

| Controller 2104 |
| --- |

| Instruction fetch buffer 2109 |
| --- |

| External memory |
| --- |

| Bus interface unit 2110 |
| --- |

Neural network processing unit 2100

FIG. 21

## INTERNATIONAL SEARCH REPORT

| International application No. |
| --- |
| **PCT/CN2024/074830** |

| A. | CLASSIFICATION OF SUBJECT MATTER |
| --- | --- |

G06N3/0464(2023.01)i;  G06N3/048(2023.01)i

According to International Patent Classification (IPC) or to both national classification and IPC

| B. | FIELDS SEARCHED |
| --- | --- |

Minimum documentation searched (classification system followed by classification symbols)

IPC: G06N, G06V

Documentation searched other than minimum documentation to the extent that such documents are included in the fields searched

Electronic data base consulted during the international search (name of data base and, where practicable, search terms used)

VEN, CNTXT, USTXT, DWPI, CNKI, IEEE: 激活函数, 融合, 非线性, 参数, 权重, 网络层, 全连接层, 卷积层, activation function, fusion, nonlinearity, parameters, weight, network layer, fully connected layer, convolutional layer

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116258176 A (HUAWEI TECHNOLOGIES CO., LTD.) 13 June 2023 (2023-06-13) claims 1-38 | 1-38 |
| X | CN 114359819 A (TENCENT TECHNOLOGY (SHENZHEN) CO., LTD.) 15 April 2022 (2022-04-15) description, paragraphs 37-39 and 95-110 | 1-10, 12-22, 26-38 |
| A | CN 115601692 A (HUAWEI TECHNOLOGIES CO., LTD.) 13 January 2023 (2023-01-13) entire document | 1-38 |
| A | CN 110046599 A (NORTHEASTERN UNIVERSITY) 23 July 2019 (2019-07-23) entire document | 1-38 |
| A | US 2017140253 A1 (XEROX CORPORATION) 18 May 2017 (2017-05-18) entire document | 1-38 |
| A | US 2021150347 A1 (QUALCOMM INCORPORATED) 20 May 2021 (2021-05-20) entire document | 1-38 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 April 2024** | **09 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/074830**

| Patent document cited in search report | | | Publication date (day/month/year) | Patent family member(s) | | | Publication date (day/month/year) |
|---|---|---|---|---|---|---|---|
| CN | 116258176 | A | 13 June 2023 | None | | | |
| CN | 114359819 | A | 15 April 2022 | None | | | |
| CN | 115601692 | A | 13 January 2023 | WO | 2023280113 | A1 | 12 January 2023 |
| | | | | EP | 4318313 | A1 | 07 February 2024 |
| CN | 110046599 | A | 23 July 2019 | None | | | |
| US | 2017140253 | A1 | 18 May 2017 | None | | | |
| US | 2021150347 | A1 | 20 May 2021 | WO | 2021097442 | A1 | 20 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310093712